# EUROPEAN PATENT APPLICATION

(11) **EP 4 701 263 A1**
(43) Date of publication of application: **25.02.2026**
(21) Application number: 24792677.7
(22) Date of filing: 16.04.2024
(51) Int. Cl.: H04W 28/04, H04W 72/25, H04W 72/40, H04W 72/54, H04W 72/0453, H04W 74/0808, H04W 92/18

(54) **TERMINAL AND COMMUNICATION METHOD**

(30) Priority: 17.04.2023 JP 2023067236
(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); NAGATA, Satoshi, Tokyo 100-6150 (JP)
(74) Representative: Hoffmann Eitle
(86) International application number: PCT/JP2024/015181
(87) International publication number: WO 2024/219403

(57) **Abstract**

A terminal includes a reception unit configured to perform listen before talk (LBT) corresponding to a transmission signal in a resource pool including a plurality of resource block (RB) sets in an unlicensed band; a control unit configured to determine a channel in each of the plurality of RB sets based on a resource of the transmission signal, the channel being for receiving feedback information corresponding to the transmission signal from another terminal; and a transmission unit configured to transmit the transmission signal to the another terminal in a case where the LBT is successful. The reception unit receives, on the channel, the feedback information corresponding to the transmission signal from the another terminal.

## Description

### TECHNICAL FIELD

The present invention relates to a terminal and a communication method in a wireless communication system.

### BACKGROUND ART

In Long Term Evolution (LTE) and LTE successor systems (for example, LTE-Advanced (LTE-A) and New Radio (NR) (also referred to as 5G)), a device to device (D2D) technology in which terminals communicate directly with each other without using a base station has been discussed (for example, Non-Patent Literature 1).

D2D reduces traffic between terminals and base stations and enables communication between terminals even when base stations are unable to communicate during a disaster or the like. In 3rd Generation Partnership Project (3GPP (registered trademark)), although D2D is referred to as "sidelink", the more generic term D2D is used in the present specification. However, in the description of embodiments described below, sidelink is also used as necessary.

D2D communication is broadly classified into D2D discovery for discovering other communicable terminals and D2D communication (also referred to as D2D direct communication, device-to-device direct communication, or the like) for performing direct communication between terminals. When D2D communication, D2D discovery, and the like are not particularly distinguished from each other, they are hereinafter simply referred to as D2D. Further, a signal transmitted and received by D2D is hereinafter referred to as a D2D signal. Various use cases of Vehicle-to-Everything (V2X) services in NR have been discussed (for example, Non-Patent Literature 2).

Further, in NR Release 17 (for example, Non-Patent Literature 3), use of a frequency band that is higher than that of the conventional releases has been discussed. For example, applicable numerologies including subcarrier spacings, channel bandwidths, and the like, physical layer design, and possible failures in actual wireless communication in the 52.6 GHz to 71 GHz frequency band have been discussed.

### CITATION LIST

### NON-PATENT LITERATURES

Non-Patent Literature 1: 3GPP TS 38.211 V17.1.0 (2022-03)
Non-Patent Literature 2: 3GPP TR 22.886 V15.1.0 (2017-03)
Non-Patent Literature 3: 3GPP TS 38.306 V17.0.0 (2022-03)
Non-Patent Literature 4: 3GPP TS 37.213 V17.1.0 (2022-03)
Non-Patent Literature 5: 3GPP TS 38.213 V17.1.0 (2022-03)

### SUMMARY OF INVENTION

### TECHNICAL PROBLEM

In a newly-operated frequency band in which higher frequencies that are higher than conventional frequencies are used, an unlicensed band is defined. In the unlicensed band, various regulations are specified, and, for example, listen before talk (LBT) is performed at the time of channel access. In the higher frequency band, when D2D communication is performed, an operation adapted to the regulations in the unlicensed band is required. Here, in a case where a certain resource pool is configured across a plurality of LBT channels, it is necessary to clarify association between physical sidelink control channel (PSCCH)/physical sidelink shared channel (PSSCH) and physical sidelink feedback channel (PSFCH).

The present invention has been made in view of the above points, and an object is to transmit a feedback channel corresponding to device-to-device direct communication in which a plurality of listen before talk (LBT) channels are used in an unlicensed band.

### SOLUTION TO PROBLEM

According to the disclosed technique, there is provided a terminal including a reception unit configured to perform listen before talk (LBT) corresponding to a transmission signal in a resource pool including a plurality of resource block (RB) sets in an unlicensed band; a control unit configured to determine a channel in each of the plurality of RB sets based on a resource of the transmission signal, the channel being for receiving feedback information corresponding to the transmission signal from another terminal; and a transmission unit configured to transmit the transmission signal to the another terminal in a case where the LBT is successful. The reception unit receives, on the channel, the feedback information corresponding to the transmission signal from the another terminal.

### ADVANTAGEOUS EFFECTS OF INVENTION

According to the disclosed technique, a feedback channel corresponding to device-to-device direct communication in which a plurality of listen before talk (LBT) channels are used in an unlicensed band can be transmitted.

### BRIEF DESCRIPTION OF DRAWINGS

[FIG. 1] FIG. 1 is a drawing illustrating V2X;
[FIG. 2] FIG. 2 is a sequence diagram illustrating an example (1) of a V2X operation;
[FIG. 3] FIG. 3 is a sequence diagram illustrating an example (2) of a V2X operation;
[FIG. 4] FIG. 4 is a sequence diagram illustrating an example (3) of a V2X operation;
[FIG. 5] FIG. 5 is a sequence diagram illustrating an example (4) of a V2X operation;
[FIG. 6] FIG. 6 is a drawing illustrating an example of a sensing operation;
[FIG. 7] FIG. 7 is a flowchart illustrating an example of a preemption operation;
[FIG. 8] FIG. 8 is a drawing illustrating an example of the preemption operation;
[FIG. 9] FIG. 9 is a drawing illustrating an example of a partial sensing operation;
[FIG. 10] FIG. 10 is a drawing illustrating an example of periodically based partial sensing; [FIG. 11] FIG. 11 is a drawing illustrating an example of contiguous partial sensing;
[FIG. 12] FIG. 12 is a drawing illustrating an example of a frequency range according to an embodiment of the present invention;
[FIG. 13] FIG. 13 is a drawing illustrating an example (1) of LBT;
[FIG. 14] FIG. 14 is a drawing illustrating an example (2) of LBT;
[FIG. 15] FIG. 15 is a drawing illustrating an example (3) of LBT;
[FIG. 16] FIG. 16 is a drawing illustrating an example (1) of a wideband operation;
[FIG. 17] FIG. 17 is a drawing illustrating an example (2) of a wideband operation;
[FIG. 18] FIG. 18 is a drawing illustrating an example (3) of a wideband operation;
[FIG. 19] FIG. 19 is a drawing illustrating an example (4) of a wideband operation;
[FIG. 20] FIG. 20 is a drawing illustrating an example (1) of PSFCH transmission according to an embodiment of the present invention;
[FIG. 21] FIG. 21 is a drawing illustrating an example (2) of PSFCH transmission according to an embodiment of the present invention;
[FIG. 22] FIG. 22 is a drawing illustrating an example (3) of PSFCH transmission according to an embodiment of the present invention;
[FIG. 23] FIG. 23 is a drawing illustrating an example of a functional configuration of a base station 10 according to an embodiment of the present invention;
[FIG. 24] FIG. 24 is a diagram illustrating an example of a functional configuration of a terminal 20 according to an embodiment of the present invention;
[FIG. 25] FIG. 25 is a drawing illustrating an example of a hardware structure of the base station 10 or the terminal 20 according to an embodiment of the present invention; and
[FIG. 26] FIG. 26 is a drawing illustrating an example of a configuration of a vehicle 2001 according to an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless local area network (LAN).

Further, in an embodiment of the present invention, the duplex method may be a time division duplex (TDD) method, a frequency division duplex (FDD) method, or any other method (e.g., flexible duplex or the like).

Further, in an embodiment of the present invention, the expression that radio (wireless) parameters are "configured (set)" may mean that a predetermined value is pre-configured, or may mean that a radio parameter indicated by a base station 10 or a terminal 20 is configured.

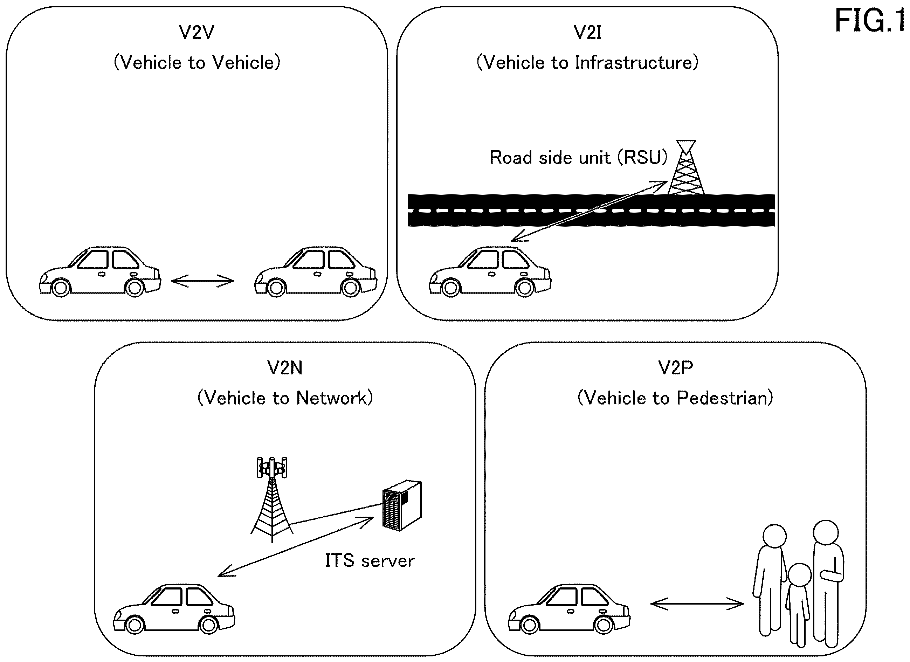

FIG. 1 is a drawing illustrating V2X. In 3GPP, enhancing D2D functions to implement Vehicle-to-Everything (V2X) or enhanced V2x (eV2X) has been discussed and technical specifications are being developed. As illustrated in FIG. 1, V2X is a part of intelligent transport systems (ITSs) and is a generic name (collective name) for: Vehicle-to-Vehicle (V2V) referring to a form of communication performed between vehicles; Vehicle-to-Infrastructure (V2I) referring to a form of communication performed between a vehicle and a road-side unit (RSU) that is installed on the road-side; Vehicle to Network (V2N) referring to a form of communication performed between a vehicle and an ITS server; and Vehicle-to-Pedestrian (V2P) referring to a form of communication performed between a vehicle and a mobile terminal that is carried by a pedestrian.

Further, in 3GPP, V2X using LTE/NR's cellular communication and communication between terminals has been discussed. V2X using cellular communication may be referred to as cellular V2X. In NR V2X, there have been discussions to achieve higher system capacity, reduced latency, higher reliability, and quality of service (QoS) control.

With respect to LTE V2X or NR V2X, it is anticipated that discussions will go beyond 3GPP specifications in the future. For example, the following items are expected to be discussed: how to secure interoperability; how to reduce cost by implementing higher layers; how to use or how to switch between multiple radio access technologies (RATs); how to handle regulations of each country; how to obtain and distribute data of LTE V2X or NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals carried by people, may be apparatuses mounted on drones or aircrafts, or may be base stations, RSUs, relay stations (relay nodes), terminals capable of scheduling, or the like.

Note that sidelink (SL) may be distinguished from uplink (UL) or downlink (DL) based on any one of or any combination of the following 1) through 4). Furthermore, SL may be referred to as a different name.
1) Resource arrangement in the time domain
2) Resource arrangement in the frequency domain
3) Synchronization signal to be referred to (including a sidelink synchronization signal (SLSS))
4) Reference signal that is used for path loss measurement used for transmission power control

Further, with respect to orthogonal frequency division multiplexing (OFDM) of SL or UL, any of cyclic-prefix OFDM (CP-OFDM), discrete Fourier transform-spread-OFDM (DFT-S-OFDM), OFDM without transform precoding, and OFDM with transform precoding may be applied.

In LTE SL, with respect to allocating SL resources to a terminal 20, Mode 3 and Mode 4 are defined. In Mode 3, transmission resources are dynamically allocated using downlink control information (DCI) that is transmitted from a base station 10 to the terminal 20. In addition, semi-persistent scheduling (SPS) is available in Mode 3. In Mode 4, the terminal 20 autonomously selects transmission resources from a resource pool.

Note that a slot in an embodiment of the present invention may be read as (replaced with) a symbol, a mini slot, a subframe, a radio frame, or a transmission time interval (TTI). Further, a cell in an embodiment of the present invention may be read as (replaced with) a cell group, a carrier component, a bandwidth part (BWP), a resource pool, a resource, a radio access technology (RAT), a system (including a wireless LAN), or the like.

Note that, in an embodiment of the present invention, the terminal 20 is not limited to a V2X terminal, and may be any type of terminal that performs D2D communication. For example, the terminal 20 may be a terminal carried by a user, such as a smartphone, or an Internet of Things (IoT) device such as a smart meter.

In addition, it is expected that a hybrid automatic repeat request (HARQ) is supported for unicast and groupcast of sidelink in NR-SL. In addition, sidelink feedback control information (SFCI) including a HARQ response is defined in NR-V2X. In addition, SFCI transmission via a physical sidelink feedback channel (PSFCH) is under consideration.

Note that, in the following description, it is assumed that a PSFCH is used in the transmission of HARQ-ACK on sidelink. However, this is just an example. For example, a PSCCH may be used to transmit HARQ-ACK on sidelink, a PSSCH may be used to transmit HARQ-ACK on sidelink, or other channels may be used to transmit HARQ-ACK on sidelink.

Hereinafter, for the sake of convenience, all information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

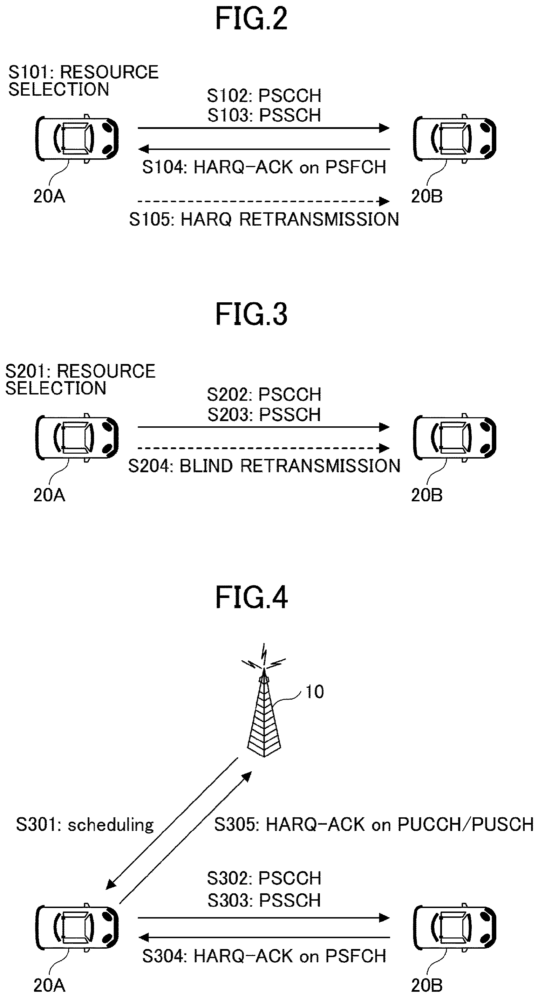

FIG. 2 is a sequence diagram illustrating an example (1) of a V2X operation. As illustrated in FIG. 2, the wireless communication system according to an embodiment of the present invention may include a terminal 20A and a terminal 20B. Although there are many user devices in actuality, FIG. 2 illustrates only the terminal 20A and the terminal 20B.

Hereinafter, when the terminal 20A, the terminal 20B, and the like are not particularly distinguished, the term "terminal 20" or "user device" is used for the sake of convenience. FIG. 2 illustrates, for example, a case where both the terminal 20A and the terminal 20B are within a coverage of a cell. However, the operation in an embodiment of the present invention can be applied to a case where the terminal 20B is outside the coverage.

As described above, in an embodiment, the terminal 20 is, for example, a device mounted in a vehicle such as an automobile, and has a cellular communication function as a UE in LTE or NR and a sidelink function. The terminal 20 may be a typical mobile terminal (such as a smartphone). Further, the terminal 20 may also be an RSU. The RSU may be a UE-type RSU having UE functions or a gNB-type RSU having base station functions.

Note that the terminal 20 need not be a device in a single housing. For example, even when various sensors are arranged and distributed in a vehicle, a device including the various sensors may be the terminal 20.

Further, processing contents of sidelink transmission data of the terminal 20 are basically the same as those of UL transmission in LTE or NR. For example, the terminal 20 scrambles a codeword of transmission data, modulates to generate complex-valued symbols, maps the complex-valued symbols to one or two layers, and performs precoding. Further, the precoded complex-valued symbols are mapped to a resource element to generate a transmission signal (e.g., a complex-valued time-domain SC-FDMA signal), and the generated signal is transmitted from each antenna port.

Note that the base station 10 has a function of cellular communication as a base station in LTE or NR and a function of enabling communication of the terminal 20 according to an embodiment of the present invention (e.g., resource pool setting, resource allocation, and the like). Further, the base station 10 may also be an RSU (a gNB-type RSU).

Further, in the wireless communication system according to an embodiment of the present invention, a signal waveform used by the terminal 20 for SL or UL may be OFDMA, SC-FDMA, or any other signal waveform.

The terminal 20 transmits a sidelink synchronization signal block (S-SSB) as an SL synchronization signal. The S-SSB may include a sidelink primary synchronization signal (S-PSS), a sidelink secondary synchronization signal (S-SSS), and a physical sidelink broadcast channel (PSBCH). Note that the names S-SSB, S-PSS, and S-SSS are examples, and names other than S-SSB, S-PSS, and S-SSS may be used.

The terminal 20 transmits an S-SSB to another terminal 20 based on a signal received from the base station apparatus 10, a global navigation satellite system (GNSS) signal, or a signal received from another terminal 20. Note that, if the terminal 20 cannot transmit an S-SSB based on any signal from the base station apparatus 10, the GNSS, or another terminal 20, the terminal 20 may transmit an autonomously determined S-SSB to another terminal 20. A resource available for an S-SSB may be a periodic slot and may be referred to as an S-SSB occasion.

In step S101, the terminal 20A autonomously selects a resource to be used for a PSCCH and a PSSCH from a resource selection window having a predetermined period of time. The resource selection window may be configured by the base station 10 for the terminal 20. Here, the predetermined period of the resource selection window may be specified by an implementation condition of the terminal such as a processing time or a maximum allowable packet delay time, or may be specified in advance by technical specifications, and the predetermined period of time may be referred to as a section in the time domain.

In step S102 and step S103, the terminal 20A uses the resource autonomously selected in step S101 to transmit sidelink control information (SCI) via the PSCCH and/or the PSSCH and transmit SL data via the PSSCH. For example, the terminal 20A may transmit the PSCCH by using a frequency resource that is adjacent to or is not adjacent to a frequency resource of the PSSCH with a time resource that is at least partially the same as a time resource of the PSSCH.

The terminal 20B receives the SCI (PSCCH and/or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected resource in the SCI and transmit the information. Note that the resource available for the PSFCH may be a periodic slot and a symbol at the end (except for the last symbol) in the slot, and may be referred to as a PSFCH occasion.

In step S104, the terminal 20B transmits HARQ-ACK for the received data to the terminal 20A using the PSFCH resource specified by the received SCI.

In step S105, when the HARQ-ACK received in step S104 indicates a request for retransmission, that is, when the HARQ-ACK is NACK (a negative response), the terminal 20A retransmits the PSCCH and the PSSCH to the terminal 20B. The terminal 20A may retransmit the PSCCH and the PSSCH by using the autonomously selected resource.

Note that in a case where HARQ control with HARQ feedback is not performed, step S104 and step S105 need not be performed.

FIG. 3 is a sequence diagram illustrating an example (2) of a V2X operation. A non-HARQ-control-based blind retransmission may be performed so as to improve the transmission success rate or reach distance.

In step S201, the terminal 20A autonomously selects a resource to be used for a PSCCH and a PSSCH from a resource selection window having a predetermined period of time. The resource selection window may be configured by the base station 10 for the terminal 20.

In step S202 and step S203, the terminal 20A uses the resource autonomously selected in step S201 to transmit SCI via the PSCCH and/or the PSSCH and transmit SL data via the PSSCH. For example, the terminal 20A may transmit the PSCCH by using a frequency resource that is adjacent to a frequency resource of the PSSCH with a time resource that is at least partially the same as a time resource of the PSSCH.

In step S204, the terminal 20A retransmits the SCI via the PSCCH and/or the PSSCH and the SL data via the PSSCH to the terminal 20B by using the resource autonomously selected in step S201. The retransmission in step S204 may be performed multiple times.

Note that, if blind retransmission is not performed, step S204 need not be performed.

FIG. 4 is a sequence diagram illustrating an example (3) of a V2X operation. The base station 10 may perform sidelink scheduling. That is, the base station 10 may determine a sidelink resource to be used by the terminal 20 and transmit information indicating the resource to the terminal 20. In addition, in a case where HARQ control with HARQ feedback is to be applied, the base station 10 may transmit information indicating a PSFCH resource to the terminal 20.

In step S301, the base station 10 performs SL scheduling by sending downlink control information (DCI) to the terminal 20A via a PDCCH. For the sake of convenience, the DCI for SL scheduling is hereinafter referred to as SL scheduling DCI.

Further, in step S301, it is assumed that the base station 10 also transmits DCI for DL scheduling (which may be referred to as DL allocation) to the terminal 20A via the PDCCH. For the sake of convenience, the DCI for DL scheduling is hereinafter referred to as DL scheduling DCI. The terminal 20A, which has received the DL scheduling DCI, receives DL data via a PDSCH using by a resource specified by the DL scheduling DCI.

In step S302 and step S303, the terminal 20A uses the resource specified by the SL scheduling DCI to transmit sidelink control information (SCI) via a PSCCH and/or a PSSCH and transmit SL data via the PSSCH. Note that, in the SL scheduling DCI, only a PSSCH resource may be specified. In this case, for example, the terminal 20A may transmit the PSCCH by using a frequency resource that is adjacent to a frequency resource of the PSSCH with a time resource that is at least partially the same as a time resource of the PSSCH.

The terminal 20B receives the SCI (PSCCH and/or PSSCH) and the SL data (PSSCH) transmitted from the terminal 20A. The SCI received via the PSCCH and/or the PSSCH includes information of the PSFCH resource for the terminal 20B to send a HARQ-ACK for reception of the data.

The information of the resource is included in the DL scheduling DCI or the SL scheduling DCI transmitted from the base station 10 in step S301, and the terminal 20A acquires the information of the resource from the DL scheduling DCI or the SL scheduling DCI and includes the acquired information in the SCI. Alternatively, the DCI transmitted from the base station 10 need not include the information of the resource, and the terminal 20A may autonomously include the information of the resource in the SCI and transmit the SCI including the information.

In step S304, the terminal 20B transmits HARQ-ACK for the received data to the terminal 20A by using the PSFCH resource specified by the received SCI.

In step S305, the terminal 20A transmits the HARQ-ACK by using, for example, a physical uplink control channel (PUCCH) resource specified by the DL scheduling DCI (or the SL scheduling DCI) at a timing (for example, a slot-by-slot timing) specified by the DL scheduling DCI (or the SL scheduling DCI), and the base station 10 receives the HARQ-ACK. The HARQ-ACK codebook may include both the HARQ-ACK received from the terminal 20B or the HARQ-ACK generated based on a PSFCH that is not received, and the HARQ-ACK for the DL data. However, the HARQ-ACK for the DL data is not included if the DL data is not allocated. In NR Rel. 16, the HARQ-ACK codebook does not include the HARQ-ACK for DL data.

Note that in a case where HARQ control with HARQ feedback is not performed, step S304 and/or step S305 need not be performed.

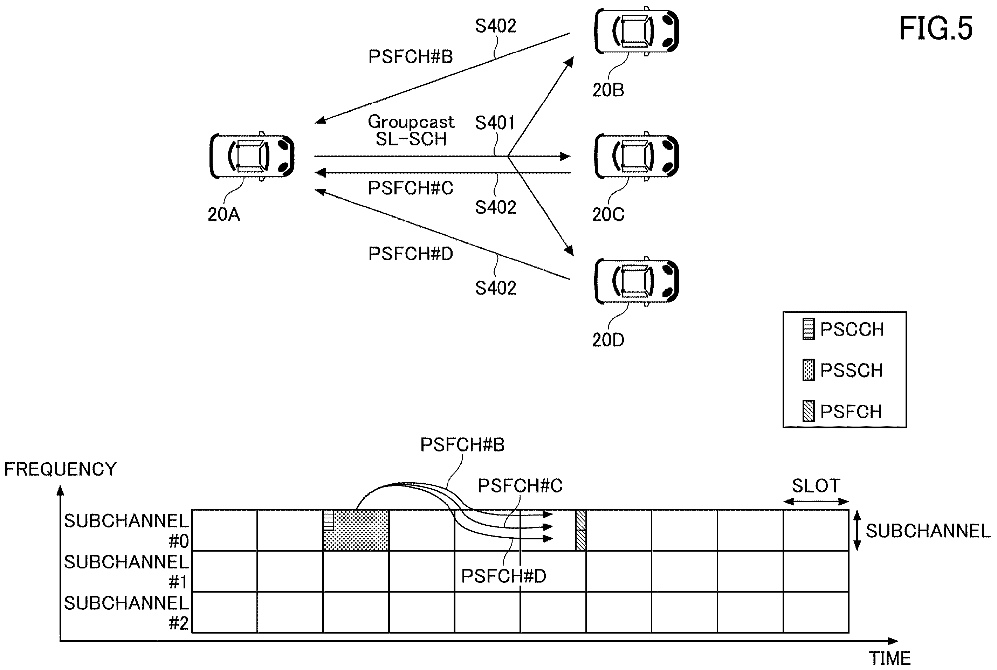

FIG. 5 is a sequence diagram illustrating an example (4) of a V2X operation. As described above, it is supported in the NR sidelink that an HARQ response is transmitted via a PSFCH. Note that as a format of a PSFCH, a format that is the same as or similar to that of physical uplink control channel (PUCCH) format 0 can be used. That is, the format of the PSFCH may have a physical resource block (PRB) size of 1, and may be a sequence-based format where ACK and NACK are identified by a sequence difference and/or a cyclic shift difference. The format of the PSFCH is not limited to the above-described format. A PSFCH resource may be located at one symbol or a plurality of symbols at the end of a slot. Further, a period N may be configured or predefined for the PSFCH resource. The period N may be configured or predefined in units of slot.

In FIG. 5, the vertical axis corresponds to the frequency domain and the horizontal axis corresponds to the time domain. A PSCCH may be located at one symbol at the beginning of a slot, at a plurality of symbols from the beginning, or at a plurality of symbols from a symbol that is not at the beginning. A PSFCH may be located at one symbol at the end of a slot or at a plurality of symbols at the end of the slot. Note that consideration of a symbol for automatic gain control (AGC) and a symbol for switching transmission/reception may be omitted for the above "beginning of a slot" and "end of a slot". That is, for example, in a case where one slot is composed of 14 symbols, the "beginning of a slot" and the "end of a slot" may respectively mean a first symbol and a last symbol among 12 symbols with the original first symbol and the original last symbol being excluded. In the example illustrated in FIG. 5, three subchannels are configured in a resource pool, and two PSFCHs are located at the third slot after a slot in which a PSSCH is located. Arrows from the PSSCH to the PSFCHs indicate an example of the PSFCHs associated with the PSSCH.

In a case where an HARQ response in an NR-V2X groupcast is an option 2 in which ACK or NACK is to be transmitted, it is necessary to determine a resource used for sending and receiving a PSFCH. As illustrated in FIG. 5, in step S401, a terminal 20A, which is a transmitting-side terminal 20, performs groupcast to a terminal 20B, a terminal 20C, and a terminal 20D, which are receiving-side terminals 20, via a sidelink shared channel (SL-SCH). Subsequently, in step S402, the terminal 20B uses a PSFCH #B, the terminal 20C uses a PSFCH #C, and the terminal 20D uses a PSFCH #D, to transmit HARQ responses to the terminal 20A. As illustrated in the example of FIG. 5, in a case where the number of PSFCH resources available is less than the number of receiving-side terminals 20 belonging to the group, it is necessary to determine how to allocate PSFCH resources. The transmitting-side terminal 20 may acquire the number of receiving-side terminals 20 in the groupcast. Note that in groupcast option 1, only NACK is transmitted as a HARQ response, and ACK is not transmitted.

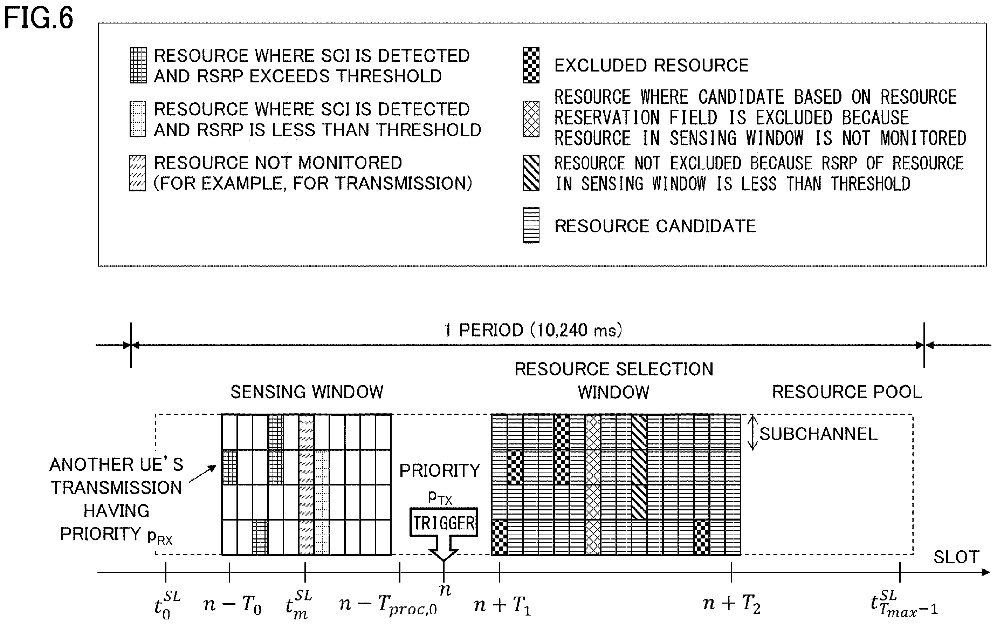

FIG. 6 is a drawing illustrating an example of a sensing operation in NR. In resource allocation mode 2, the terminal 20 selects a resource and performs transmission. As illustrated in FIG. 6, the terminal 20 performs sensing in a sensing window in a resource pool. According to the sensing, the terminal 20 receives a resource reservation field or a resource assignment field included in SCI transmitted from another terminal 20, and identifies available resource candidates in a resource selection window in the resource pool, based on the received field. Subsequently, the terminal 20 randomly selects a resource from the available resource candidates.

Further, as illustrated in FIG. 6, the configuration of the resource pool may have a period. For example, the period may be 10,240 milliseconds. FIG. 6 is an example in which slots from slot t₀^{SL} to slot t_{TmaX-1}^{SL} are configured as the resource pool. A resource pool in each period may have an area configured by, for example, a bitmap.

In addition, as illustrated in FIG. 6, it is assumed that a transmission trigger in the terminal 20 occurs in a slot n and the priority of the transmission is p_{TX}. In the sensing window from slot n-T₀ to a slot immediately before the slot n-T_{proc,0}, the terminal 20 can detect, for example, that another terminal 20 is performing transmission having priority p_{RX}. In a case where SCI is detected in the sensing window and the reference signal received power (RSRP) exceeds a threshold, a resource in the resource selection window corresponding to the SCI is excluded. In addition, in a case where SCI is detected in the sensing window and the RSRP is less than the threshold, a resource in the resource selection window corresponding to the SCI is not excluded. The threshold may be, for example, a threshold Th_{pTx, pRX} configured or defined for each resource in the sensing window based on the priority p_{TX} and the priority p_{RX}.

In addition, a resource in the resource selection window that is a candidate of resource reservation information corresponding to a resource that is not monitored in the sensing window due to transmission, such as a slot tₘ^{SL} illustrated in FIG. 6, is excluded.

As illustrated in FIG. 6, in the resource selection window from slots n+T₁ to n+T₂, resources occupied by other UEs are identified, and resources from which the identified resources are excluded become available resource candidates. Assuming that a set of available resource candidates is SA, in a case where the SA is less than 20% of the resource selection window, the resource identification may be performed again by raising the threshold Th_{pTx,} p_{RX} configured for each resource in the sensing window by 3 dB. That is, by raising the threshold Th_{pTx, pRX} and performing the resource identification again, the number of resources that are not excluded because the RSRP is less than the threshold may be increased, such that the set SA of resource candidates becomes greater than or equal to 20% of the resource selection window. The operation of raising the threshold Th_{pTx, pRX} configured for each resource in the sensing window by 3 dB and performing the resource identification again in a case where the SA is less than 20% of the resource selection window, may be repeatedly performed.

The lower layer of the terminal 20 may report the SA to the higher layer. The higher layer of the terminal 20 may perform random selection for the SA so as to determine a resource to be used. The terminal 20 may perform sidelink transmission using the determined resource. For example, the higher layer may be a MAC layer, and the lower layer may be a PHY layer or a physical layer.

Although the operation of the transmitting-side terminal 20 has been described with reference to FIG. 6, a receiving-side terminal 20 may detect data transmission from another terminal 20 based on a result of sensing or partial sensing and receive data from the other terminal 20.

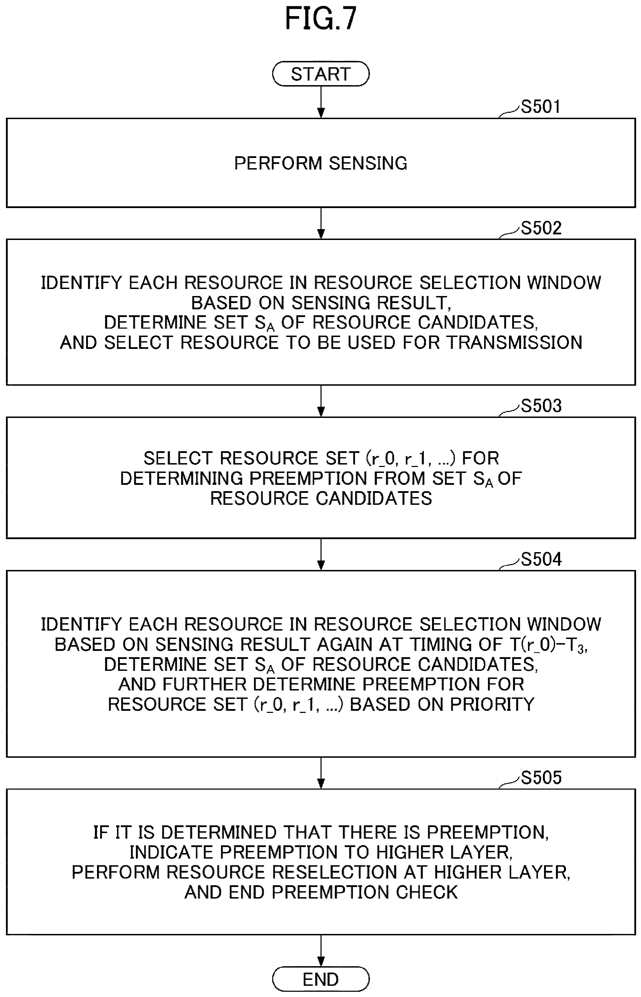

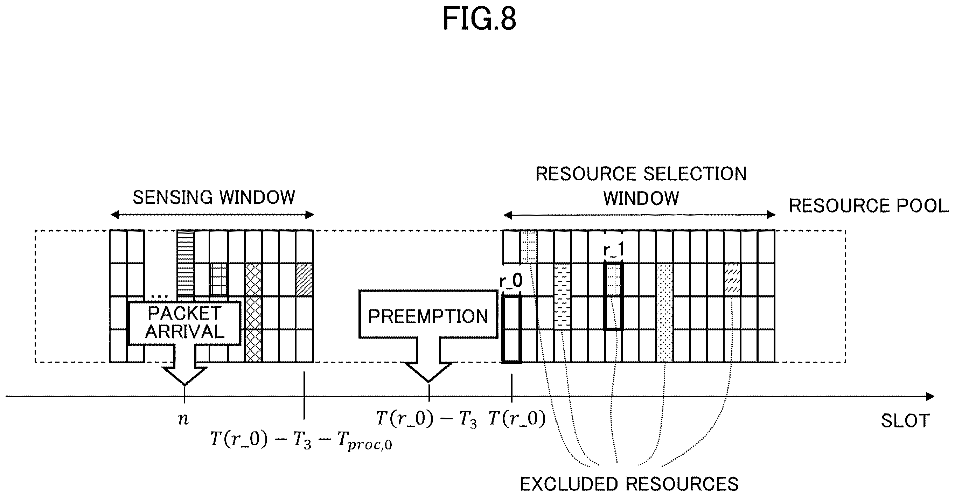

FIG. 7 is a flowchart illustrating an example of preemption in NR. FIG. 8 is a drawing illustrating an example of preemption in NR. In step S501, the terminal 20 performs sensing in the sensing window. In a case where the terminal 20 performs a power-saving operation, the sensing may be performed in a limited period of time specified in advance. Subsequently, the terminal 20 identifies each resource in the resource selection window based on the sensing result, determines a set S_{A} of resource candidates, and selects a resource to be used for transmission (S502). Subsequently, the terminal 20 selects a resource set (r_0, r_1, ...) for determining preemption from the set S_{A} of resource candidates (S503). The resource set may be indicated from the higher layer to the PHY layer as a resource for determining whether preemption has been performed.

In step S504, illustrated in FIG. 8, the terminal 20 identifies each resource in the resource selection window based on the sensing result again at a timing of T(r_0)-T₃, determines the set S_{A} of resource candidates, and further determines preemption for the resource set (r_0, r_1, ...) based on the priority. For example, with respect to r_1 illustrated in FIG. 8, the SCI transmitted from the other terminal 20 is detected by repeated sensing, and r_1 is not included in SA. In a case where the preemption is enabled and the value prio_RX indicating the priority of the SCI transmitted from the other terminal 20 is lower than the value prio_TX indicating the priority of the transport block to be transmitted from the terminal 20 itself, the terminal 20 determines that the resource r_1 has been preempted. Note that the lower the value indicating the priority, the higher the priority. That is, in a case where the value prio_RX indicating the priority of the SCI transmitted from the other terminal 20 is higher than the value prio_TX indicating the priority of the transport block to be transmitted from the terminal 20 itself, the terminal 20 does not exclude the resource r_1 from the SA. Alternatively, in a case where the preemption is enabled only for a specific priority (for example, sl-PreemptionEnable is pl1, pl2, ..., or pl8), the priority is referred to as prio_pre. Here, in a case where the value prio_RX indicating the priority of the SCI transmitted from the other terminal 20 is lower than prio_pre, and where the value prio_RX is lower than the value prio_TX indicating the priority of the transport block to be transmitted from the terminal 20 itself, the terminal 20 determines that the resource r_1 has been preempted.

In step S505, if it is determined that there is preemption in step S504, the terminal 20 indicates the preemption to the higher layer, performs resource reselection at the higher layer, and ends the preemption check.

Note that in the case of re-evaluation being performed instead of the preemption check, in the above-described step S504, after determining the set SA of resource candidates, in a case where resources in the resource set (r_0, r_1, ...) are not included in the SA, the resources are not used and resource reselection is performed at the higher layer.

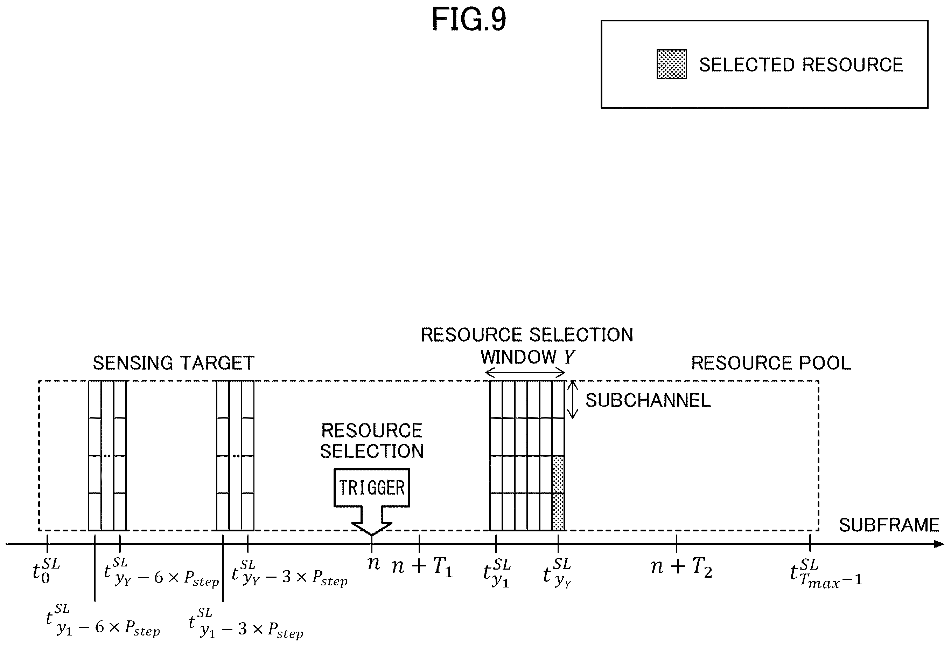

FIG. 9 is a drawing illustrating an example of a partial sensing operation in LTE. In a case where the partial sensing is configured by the higher layer in the LTE sidelink, the terminal 20 selects resources and performs transmission as illustrated in FIG. 9. As illustrated in FIG. 9, the terminal 20 performs partial sensing for a part of a sensing window in a resource pool, i.e., a sensing target. According to the partial sensing, the terminal 20 receives a resource reservation field contained in SCI transmitted from another terminal 20 and identifies available resource candidates in a resource selection window in the resource pool based on the received field. Subsequently, the terminal 20 randomly selects a resource from the available resource candidates.

FIG. 9 is an example in which subframes from subframe t₀^{SL} to subframe t_{Tmax-1}^{SL} are configured as a resource pool. The resource pool may have a target area configured by a bitmap, for example. As illustrated in FIG. 9, a transmission trigger in the terminal 20 is assumed to occur in subframe n. As illustrated in FIG. 9, among subframes from subframe n+T₁ to subframe n+T₂, Y subframes from subframe t_{y1}^{SL} to subframe t_{yY}^{SL} may be configured as a resource selection window.

The terminal 20 can detect, for example, that another terminal 20 is performing transmission in one or more sensing targets from subframe t_{y1-k×Pstep}^{SL} to subframe t_{yY-k×Pstep}^{SL}, the length of which is Y subframes. The k may be determined by a 10-bit bitmap, for example. FIG. 9 illustrates an example in which the third and sixth bits of the bitmap are set to "1" indicating that the partial sensing is to be performed. That is, in FIG. 9, subframes from subframe t_{y1-6×Pstep}^{SL} to subframe t_{yY-6×Pstep}^{SL}, and subframes from subframe t_{y1-3×Pstep}^{SL} to subframe t_{yY-3×Pstep}^{SL} are configured as the sensing targets. As described above, the k-th bit of the bitmap may correspond to a sensing window from subframe t_{y1-k×Pstep}^{SL} to subframe t_{yY-k×Pstep}^{SL}. Note that yᵢ corresponds to the index (1...Y) in the Y subframes.

Note that k may be configured in a 10-bit bitmap or defined in advance, and Pₛₜₑₚ may be 100 ms. However, in a case where SL communication is performed using DL and UL carriers, Pₛₜₑₚ may be (U/(D+S+U))*100 ms. U corresponds to the number of UL subframes, D corresponds to the number of DL subframes, and S corresponds to the number of special subframes.

In a case where SCI is detected in the above sensing target and the RSRP exceeds the threshold, a resource in the resource selection window corresponding to the resource reservation field of the SCI is excluded. Further, in a case where SCI is detected in the sensing target and the RSRP is less than the threshold, a resource in the resource selection window corresponding to the resource reservation field of the SCI is not excluded. The threshold may be, for example, a threshold Th_{pTx, pRX} configured or defined for each resource in the sensing target, based on the transmitting-side priority p_{TX} and the receiving-side priority p_{RX}.

As illustrated in FIG. 9, in the resource selection window configured in the Y subframes in the section [n+T₁, n+T₂], the terminal 20 identifies a resource occupied by another UE, and resources, excluding the identified resource, become available resource candidates. Note that the Y subframes need not be contiguous. Assuming that a set of available resource candidates is S_{A}, in a case where S_{A} is less than 20% of the resource selection window, the resource identification may be performed again by raising the threshold Th_{pTx, pRX} configured for each resource in the sensing target by 3 dB.

That is, resources that are not excluded because the RSRP is less than the threshold may be increased by raising the threshold Th_{pTx, pRX} and by performing resource identification again. In addition, the RSSI of each resource in among S_{A} may be measured and a resource with the lowest RSSI may be added to a set S_{B}. The operation of adding the resource with the lowest RSSI included in S_{A} to S_{B} may be repeated until the set S_{B} of resource candidates becomes equal to or greater than 20% of the resource selection window.

The lower layer of the terminal 20 may report S_{B} to the higher layer. The higher layer of the terminal 20 may perform random selection for S_{B} so as to determine a resource to be used. The terminal 20 may perform sidelink transmission using the determined resource. Note that the terminal 20 may use the resource periodically without performing the sensing for a predetermined number of times (e.g., Cᵣₑₛₑₗ times) once the resource is secured.

Here, power saving based on random resource selection and partial sensing is described in the technical specifications in NR sidelink. The terminal 20 to which partial sensing is applied performs reception and sensing only in specific slots in the sensing window. In other words, the terminal 20 may perform partial sensing in which resource identification is performed by sensing only limited resources as compared to full sensing, and in which resource selection from the identified resource set is performed. Further, the terminal 20 may, without excluding resources from the resources in the resource selection window, cause the resources in the resource selection window to be an identified resource set and may perform random selection to select a resource from the identified resource set.

Note that a method of performing random selection at the time of resource selection, and using sensing information at the time of reevaluation or preemption check may be treated as partial sensing or as random selection.

The following 1) and 2) may be applied as operations in sensing. Note that the sensing and the monitoring may be read interchangeably, and at least one of measurement of received RSRP, acquisition of reserved resource information, or acquisition of priority information may be included in the operations.
1) Periodically based partial sensing Operation of determining sensing slots based on reservation periodicity in a mechanism in which sensing is performed only for some slots. Note that the reservation periodicity is a value related to a resource reservation period field. The period may be replaced by the periodicity.
2) Contiguous partial sensing Operation of determining sensing slots based on an aperiodic reservation in a mechanism in which sensing is performed only for some slots. Note that the aperiodic reservation is a value related to a time resource assignment field.

In addition, a plurality of resource allocation methods may be configured for a resource pool. In addition, SL-DRX (discontinuous reception) is supported as one of the power-saving functions. That is, a reception operation is performed only for a predetermined time period.

As described above, partial sensing is supported as one of the power-saving functions. In a resource pool in which partial sensing is configured, the terminal 20 may perform the periodically based partial sensing described above. The terminal 20 may receive, from the base station 10, information for configuring a resource pool in which partial sensing is configured and in which periodic reservation is configured to be enabled.

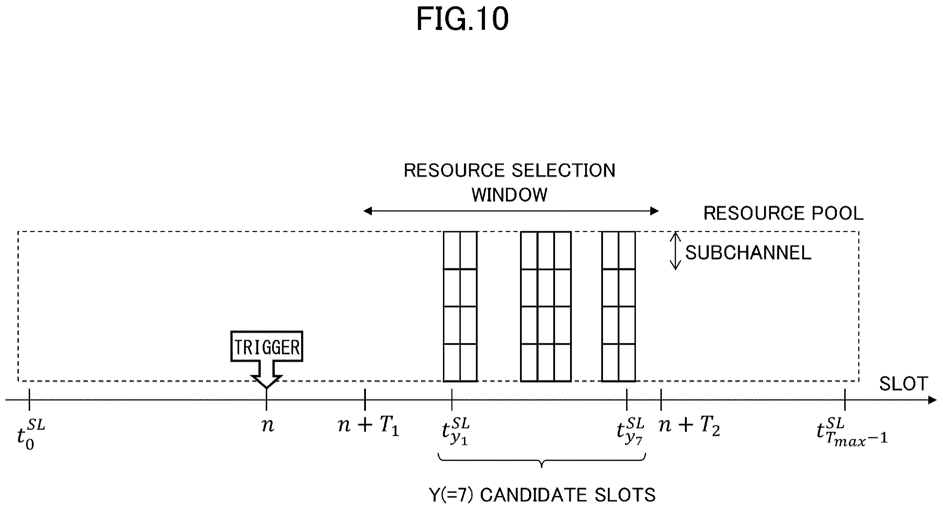

FIG. 10 is a drawing illustrating an example of periodically based partial sensing. As illustrated in FIG. 10, Y candidate slots for resource selection are selected from a resource selection window [n+T₁, n+T₂].

Assuming that t_{y}^{SL} is a slot included in the Y candidate slots, sensing may be performed by having t_{y-k×Preserve}^{SL} as a target slot of the periodically based partial sensing.

Pᵣₑₛₑᵣᵥₑ may correspond to any value included in sl-ResouceReservePeriodList that is configured or predefined. Alternatively, a value of Pᵣₑₛₑᵣᵥₑ that is limited to a subset of sl-ResouceReservePeriodList may be configured or predefined. The Pᵣₑₛₑᵣᵥₑ and sl-ResouceReservePeriodList may be configured for each transmission resource pool of the resource allocation mode 2. In addition, as UE implementation, a period included in the sl-ResouceReservePeriodList other than the limited subset may be monitored. For example, the terminal 20 may additionally monitor an occasion corresponding to P_RSVP_Tx.

Regarding a k value, the terminal 20 may monitor the latest sensing occasion in a certain reservation period that is: before slot n of the resource selection trigger; or before the first slot of the Y candidate slots subject to a processing time limitation. In addition, the terminal 20 may additionally monitor a periodic sensing occasion corresponding to a set of one or more k values. For example, as the k value, a value corresponding to the latest sensing occasion in a certain reservation period that is: before slot n of the resource selection trigger; or before the first slot of the Y candidate slots subject to the processing time limitation, and a value corresponding to the sensing occasion immediately before the latest sensing occasion in the certain reservation period, may be configured.

As described above, partial sensing is supported as one of the power-saving functions. In a resource pool in which partial sensing is configured, the terminal 20 may perform the contiguous partial sensing described above. The terminal 20 may receive, from the base station 10, information for configuring a resource pool in which partial sensing is configured and in which aperiodic reservation is configured to be enabled.

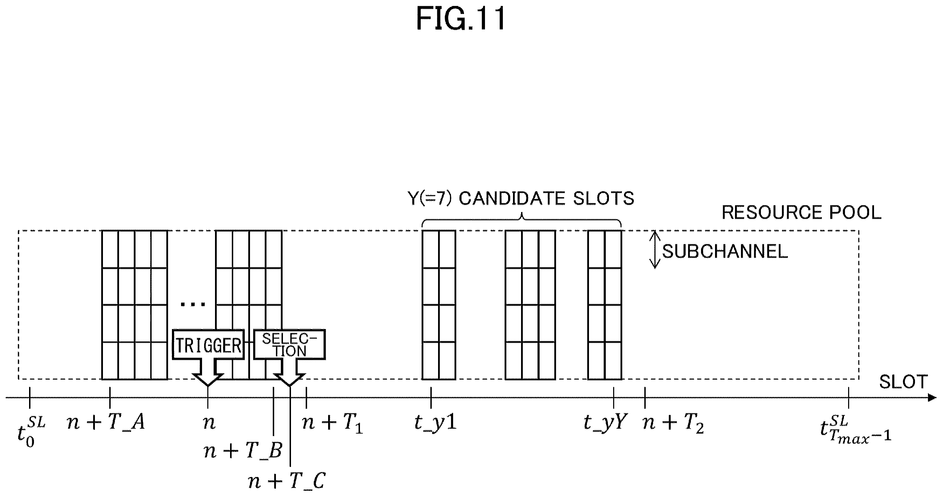

FIG. 11 is a drawing illustrating an example of contiguous partial sensing. As illustrated in FIG. 11, in a case where a trigger for resource selection is slot n, the terminal 20 selects Y candidate slots for resource selection from a resource selection window [n+T₁, n+T₂]. FIG. 11 illustrates an example in which Y = 7. As illustrated in FIG. 11, the beginning of the Y candidate slots is denoted as slot t_{y1}, the subsequent slot is denoted as t_{y2}, ..., and the end of the Y candidate slots is denoted as slot t_{yY}.

The terminal 20 performs sensing in the section [n+T_{A}, n+T_{B}] and performs resource selection at n+T_{B} or after n+T_{B} (referred to as n+T_{C}). Note that the periodically based partial sensing described above may be additionally performed. Note that T_{A} and T_{B} of the section [n+T_{A}, n+T_{B}] may be any value. In addition, n may be replaced with an index of a slot from among the Y candidate slots.

In addition, the mark "[" may be replaced with the mark "(", and the mark "]" may be replaced with the mark ")". Note that, for example, the section [a, b] is a section from a slot a to a slot b, and includes the slot a and the slot b. For example, the section (a, b) is a section from a slot a to a slot b, and does not include the slot a and the slot b.

Note that candidate resources that are targets of resource selection are described as Y candidate slots; however, all slots or some slots in the section [n+T₁, n+T₂] may be candidate slots.

In addition, as a method of improving the reliability and the delay performance, inter-terminal coordination is described in the technical specifications. For example, an inter-terminal coordination method 1 and an inter-terminal coordination method 2 as indicated below have been developed into the technical specifications. Hereinafter, a terminal 20 that transmits coordination information is described as UE-A, and a terminal 20 that receives the coordination information is described as UE-B.

Inter-terminal coordination method 1) A preferred resource set and/or a non-preferred resource set for transmission by the UE-B is transmitted from the UE-A to the UE-B. Hereinafter, the inter-terminal coordination method 1 is also described as inter-UE coordination scheme 1 (IUC scheme 1).

Inter-terminal coordination method 2) In a resource indicated by SCI that is received from the UE-B, the UE-A transmits, to the UE-B, information indicating: an expectation of a collision with another transmission; and/or a resource in which the collision is detected. The information may be transmitted via a PSFCH. Hereinafter, the inter-terminal coordination method 2 is also described as inter-UE coordination scheme 2 (IUC scheme 2).

With respect to the 3GPP release 16 or release 17 sidelink, specifications are being developed targeting 1) and 2) below.
1) Environment in which there are only 3GPP terminals in an intelligent transport systems (ITS) band
2) Environment in which UL resources are available to SL in license bands of frequency range 1 (FR1) and frequency range 2 (FR2) defined in NR

It has been discussed that an unlicensed band will be a new target of sidelink after 3GPP Release 18. For example, the newly targeted unlicensed band is an unlicensed band such as a 5 GHz to 7GHz band or a 60 GHz band.

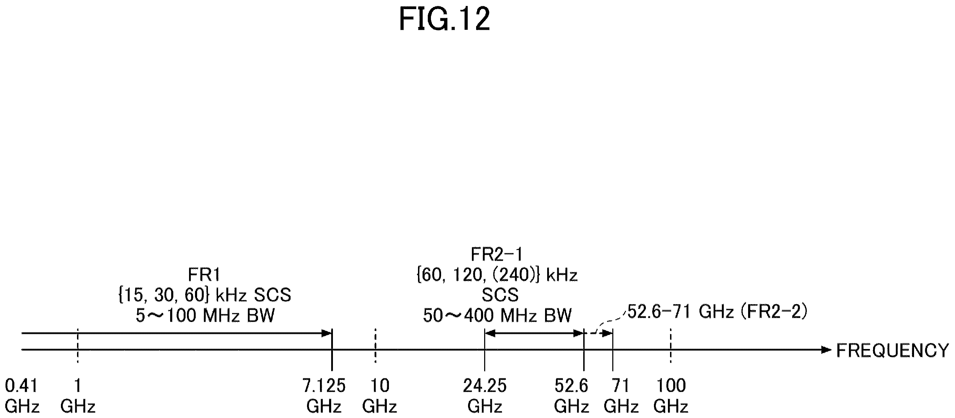

FIG. 12 is a drawing illustrating an example of a frequency band used in the wireless communication system. In the NR specifications of 3GPP Release 15 and Release 16, for example, an operation in a frequency band of 52.6 GHz or more has been discussed. Note that, as illustrated in FIG. 12, frequency range (FR) 1 in which the current operation is defined is a frequency band from 410 MHz to 7.125 GHz, sub carrier spacing (SCS) is 15 kHz, 30 kHz, or 60 kHz, and the bandwidth is from 5 MHz to 100 MHz.

FR2-1 is a frequency band from 24.25 GHz to 52.6 GHz, SCS is 60 kHz, 120 kHz, or 240 kHz, and the bandwidth is from 50 MHz to 400 MHz. As illustrated in FIG. 12, FR2-2 may be assumed to be from 52.6 GHz to 71 GHz. Furthermore, a frequency band beyond 71 GHz may be assumed to be supported.

In the case of using a band exceeding 52.6 GHz, cyclic prefix-orthogonal frequency division multiplexing (CP-OFDM)/discrete Fourier transform-spread OFDM (DFT-S-OFDM) having larger sub-carrier spacing (SCS) may be applied.

In addition, in a high frequency band such as FR2-2, an increase in phase noise between carriers becomes a problem. Accordingly, application of larger (wider) SCS or a single carrier waveform may be required.

For example, a band from 5.15 GHz to 5.35 GHz, a band from 5.47 GHz to 5.725 GHz, a band that is equal to or higher than 5.925 GHz, or the like is expected as an example of an unlicensed band in the 5 GHz to 7 GHz band.

For example, a band from 59 GHz to 66 GHz, a band from 57 GHz to 64 GHz or 66 GHz, a band from 59.4 GHz to 62.9 GHz, or the like is expected as an example of an unlicensed band in the 60 GHz band.

In the unlicensed band, various regulations are specified so as to avoid influence on other systems or other devices.

For example, in the 5 GHz to 7 GHz band, listen before talk (LBT) is performed at the time of channel access. The base station 10 or the terminal 20 performs power detection in a predetermined period of time immediately before transmission, and stops the transmission in a case where the power exceeds a predetermined value, that is, in a case where transmission from another device is detected (which may be referred to as LBT failure). In addition, the maximum channel occupancy time (MCOT) is specified. The MCOT is a maximum time duration in which transmission continuation is allowed in a case where transmission is started after the LBT, and is 4 ms in Japan, for example.

In addition, in a case where the transmission uses a carrier bandwidth, X% or more of the bandwidth must be used as an occupied channel bandwidth (OCB) requirement. For example, in Europe, as much as 80% to 100% of a nominal channel bandwidth (NCB) is required to be used. The OCB requirement is intended to ensure that channel access power detection is performed correctly.

In addition, with respect to the maximum transmission power and the maximum power spectral density, it is specified that transmission is performed with predetermined transmission power or less in order to avoid excessive interference. For example, in Europe, the maximum transmission power is 23 dBm in the 5,150 MHz to 5,350 MHz band. In addition, for example, in Europe, the maximum power spectral density is 10 dBm/MHz in the 5,150 MHz to 5,350 MHz band.

For example, in the 60 GHz band, LBT is performed at the time of channel access. The base station 10 or the terminal 20 performs power detection in a predetermined period of time immediately before transmission, and stops the transmission in a case where the power exceeds a predetermined value, that is, in a case where transmission from another device is detected. In addition, with respect to the maximum transmission power and the maximum power spectral density, it is specified that transmission is performed with predetermined transmission power or less. In addition, the capability of satisfying the OCB requirements is specified.

There are four types of channel access procedures defined in NR as described below based on the behavior difference with respect to the LBT in the time domain (duration for performing sensing). Note that the above-described sensing is an operation different from the above-described sidelink sensing and will be referred to as LBT sensing for the sake of distinction.

Type 1) Variable duration LBT sensing is performed before transmission. Type 1 is also referred to as category 4 LBT.

Type 2A) 25 µs LBT sensing is performed before transmission. Type 2A is also referred to as category 2 LBT.

Type 2B) 16 µs LBT sensing is performed before transmission. Type 2B is also referred to as category 2 LBT.

Type 2C) Transmission starts without LBT. This is the same as transmission in the licensed band.

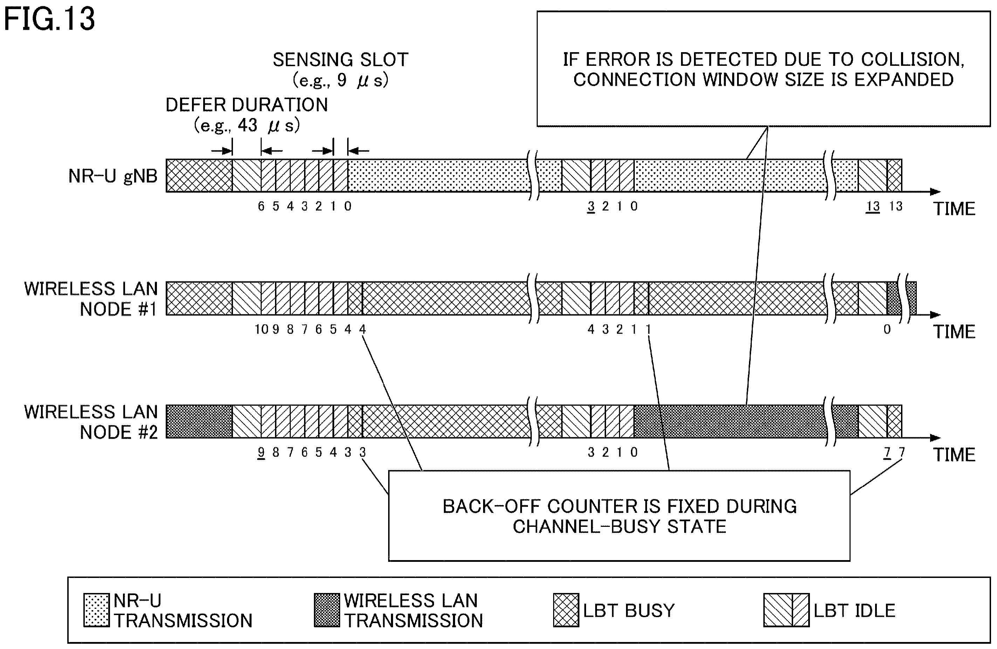

FIG. 13 is a drawing illustrating an example (1) of LBT. FIG. 13 is an example of a channel access procedure of Type 1. Type 1 is further classified into four classes each indicating a channel access priority class (CAPC) based on a difference in sensing length. LBT sensing is executed in the following two durations.

The first duration is a prioritization period or a defer duration, and has a length of 16 + 9 × mₚ [µs]. With respect to mₚ, a fixed value is defined for each channel access priority class.

The second duration is a back-off procedure, and has a length of 9 × N [µs]. The value of N is randomly determined from a certain range (refer to the CWS adjustment procedure in Non-Patent Literature 4). N is an initial value of a back-off counter, and the value of the back-off counter decreases by one each time power of a signal of another device is not detected for a duration of 9 [µs].

The above-described 9-µs LBT sensing duration may be referred to as an LBT sensing slot duration.

In the example of FIG. 13, mₚ = 3 and the defer duration is 43 µs. As illustrated in FIG. 13, the back-off counter is fixed during the channel-busy state. In addition, as illustrated in FIG. 13, in a case where an error is detected due to a transmission collision between NR-U gNB and wireless LAN node #2, the contention window size (CWS) of the NR-U gNB is expanded from 3 to 13.

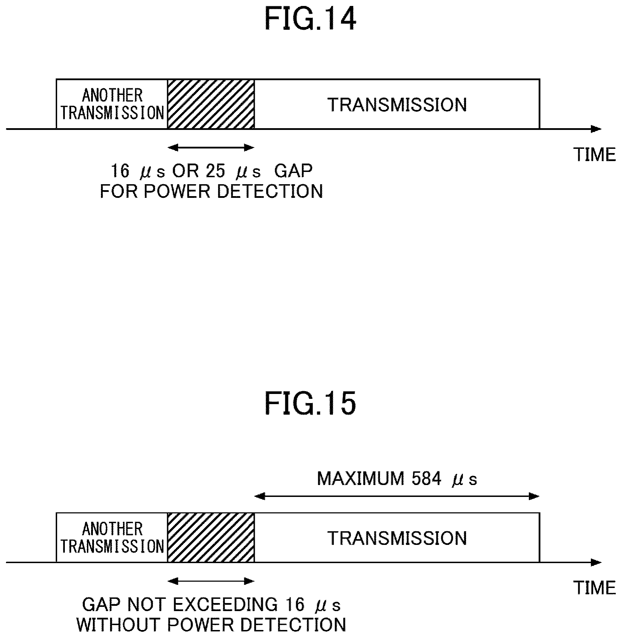

FIG. 14 is a drawing illustrating an example (2) of LBT. FIG. 14 is an example of the Type 2A or Type 2B channel access procedure without random back-off. A 25 µs gap for power detection is configured for type 2A before transmission and a 16 µs gap for power detection is configured for type 2B before transmission.

FIG. 15 is a drawing illustrating an example (3) of LBT. FIG. 15 is an example of the Type 2C channel access procedure. As illustrated in FIG. 15, power detection is not performed before transmission, and transmission is performed immediately after a gap that does not exceed 16 µs. The transmission duration may be up to 584 µs.

As described above, a plurality of LBT types are supported in NR-U. In the above-described Type 1, with respect to the initial value N of the back-off counter, a random value in a section between 0 and CWₚ whose value range is determined based on a channel access priority class p is configured. Table 1 illustrates examples of: mₚ; CW_{p,min} that is a minimum value of CWₚ; and CW_{p,max} that is a maximum value of CWₚ, which are defined for each channel access priority class p in UL.

**[Table 1]**

| Class p | mₚ | CW_{min, p} | CW_{max, p} |
|---|---|---|---|
| 1 | 2 | 3 | 7 |
| 2 | 2 | 7 | 15 |
| 3 | 3 | 15 | 1023 |
| 4 | 7 | 15 | 1023 |

As illustrated in Table 1, mₚ, CW_{p,min}, and CW_{p,max} are each determined according to the channel access priority class p. In a case where p is 1, the LBT duration calculated from Table 1 is 34 µs at a minimum and 88 µs at a maximum. In a case where p is 2, the LBT duration calculated from Table 1 is 34 µs at a minimum and 160 µs at a maximum. In a case where p is 3, the LBT duration calculated from Table 1 is 43 µs at a minimum and 9,286 µs at a maximum. In a case where p is 4, the LBT duration calculated from Table 1 is 79 µs at a minimum and 9,286 µs at a maximum. Note that Table 1 is a table used for UL.

The LBT type and the channel access priority class may be determined based on an indication from the base station 10, a channel type, or the like. The 25 µs or 16 µs gap may be configured by the scheduling of the base station 10 by taking into account timing advance (TA) and CP extension.

LBT applied to channel access is performed for each predetermined bandwidth (for example, 20 MHz). In a case where power is not detected in an LBT channel in which each transmission is included, the transmission can be performed. Each CC in Uu may be defined by using a bandwidth that is wider than the LBT channel. That is, a wideband operation is supported. Note that Uu is a radio interface between a universal terrestrial radio access network (UTRAN) and user equipment (UE).

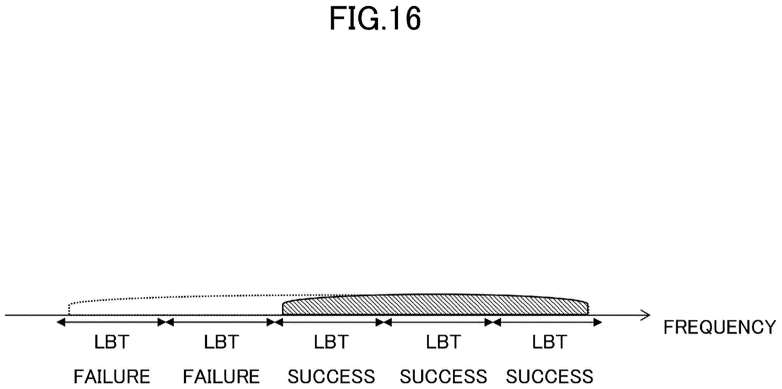

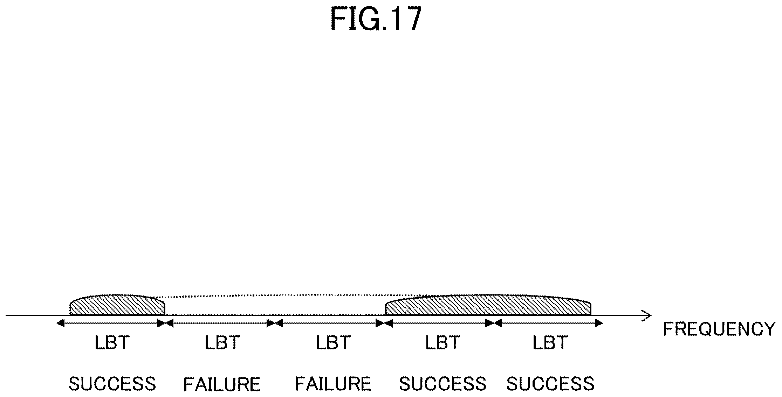

FIG. 16 is a drawing illustrating an example (1) of a wideband operation. FIG. 17 is a drawing illustrating an example (2) of a wideband operation. In a case of a wideband operation in the unlicensed band, as illustrated in FIG. 16 or FIG. 17, when LBT is successful at gNB in some or all LBT channels, transmission may be allowed in LBT channels in which the LBT is successful. As illustrated in FIG. 16, the gNB may perform transmission of a single continuous block, or as illustrated in FIG. 17, the gNB may perform transmission of a plurality of discontinuous blocks.

With respect to DL in the unlicensed band, DL type A and DL type B are specified. In the DL type A, LBT is performed for each channel, and in the DL type B, LBT type 1 is performed on a randomly selected channel and LBT type 2A is performed on the remaining channels.

The DL type A is further classified into type A1 and type A2. In the type A1, a contention window CWp is determined for each channel. In the type A2, the largest CWp among CWps determined for each channel is used.

The DL type B is further classified into type B1 and type B2. In the type B1, a single CWp is applied to all channels. In the type B2, the largest CWp among CWps determined for each channel is used.

If LBT is successful at gNB in part of or all of LBT channels, PDSCH transmission is allowed on LBT channels in which the LBT is successful. The gNB may perform transmission of a single block that is continuous in the frequency domain, or the gNB may perform transmission of a plurality of blocks that are discontinuous in the frequency domain.

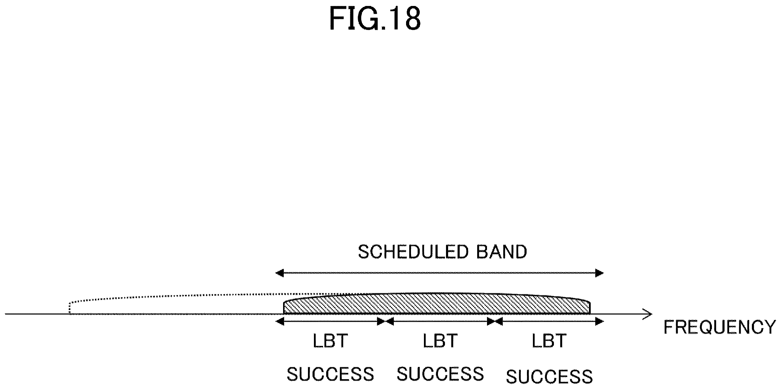

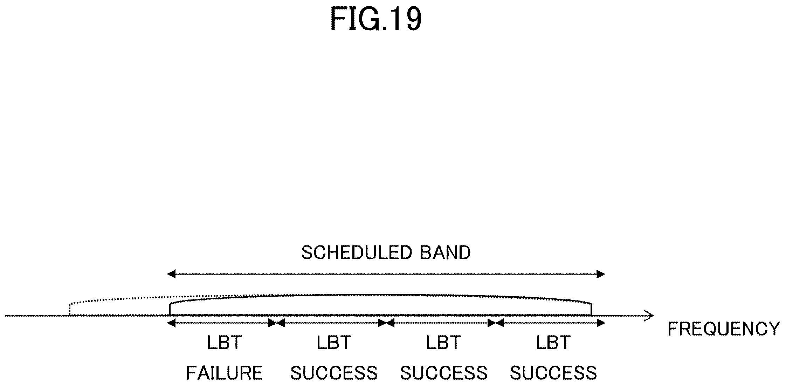

FIG. 18 is a drawing illustrating an example (3) of a wideband operation. FIG. 19 is a drawing illustrating an example (4) of a wideband operation. As illustrated in FIG. 18 or FIG. 19, transmission may be allowed if LBT is successful at UE in all LBT channels in a scheduled band. As illustrated in FIG. 19, the transmission need not be allowed if LBT fails in any of the LBT channels.

With respect to UL in the unlicensed band, an LBT type is determined based on gNB indication. In a case where the LBT type 1 is indicated, LBT type 2 is applied if LBT that is similar to the DL type B is performed for UL immediately before transmission, or the LBT type 1 is applied. In a case where LBT fails in any of LBT channels for transmission, the UL transmission is not performed in all of the LBT channels.

Here, a PSFCH is transmitted by using a resource corresponding to PSCCH/PSSCH reception. In a case where a certain resource pool is configured across a plurality of LBT channels, it is necessary to clarify the relation between association of PSCCH/PSSCH and PSFCH and the multi-channel configuration. An LBT channel may be referred to as an RB set. An LBT channel is hereinafter referred to as an RB set. Note that "PSCCH/PSSCH" may be replaced with "PSCCH and/or PSSCH".

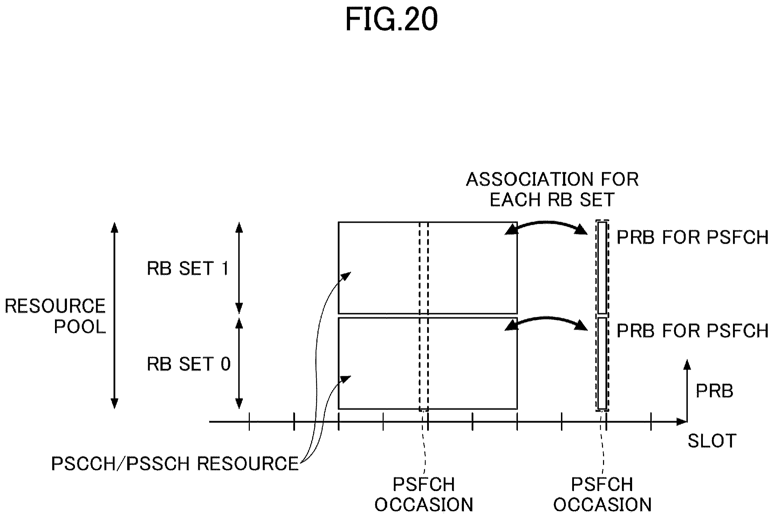

FIG. 20 is a drawing illustrating an example (1) of PSFCH transmission according to an embodiment of the present invention. As illustrated in FIG. 20, a PSCCH/PSSCH resource and a corresponding PSFCH resource may be limited to the same RB set. For example, the PSCCH/PSSCH resource and the corresponding PSFCH resource may be configured or arranged in the same RB set.

For example, sl-PSFCH-RB-set and/or sl-PSFCH-Conflict-RB-set that are parameter(s) indicating PRBs that can be used for a PSFCH in each PSFCH occasion may be defined as parameter(s) for each RB set. In a certain RB set r, when the number of sub-channels or the number of interlaces used for a PSCCH/PSSCH is denoted as Xᵣ, the number of PSCCH/PSSCH slots associated with one PSFCH occasion is denoted as Yᵣ, and Nᵣ PRBs can be used for a PSFCH, Nᵣ/(Xᵣ × Yᵣ) PRBs may be associated with each of Xᵣ × Yᵣ resources. The above-described operation may be performed for each RB set.

For example, sl-PSFCH-RB-set and/or sl-PSFCH-Conflict-RB-set may be defined as a parameter or parameters for each resource pool. In a certain RB set r, when the number of sub-channels or the number of interlaces used for a PSCCH/PSSCH is denoted as Xᵣ, the number of PSCCH/PSSCH slots associated with one PSFCH occasion is denoted as Yᵣ, and Nᵣ PRBs can be used for a PSFCH, Nᵣ/(Xᵣ × Yᵣ) PRBs may be associated with each of Xᵣ × Yᵣ resources. The above-described operation may be performed for each RB set.

For example, all PRBs included in an RB set can be used for a PSFCH, and sl-PSFCH-RB-set and/or sl-PSFCH-Conflict-RB-set parameter(s) are not required to be provided by a configuration or pre-configuration. In a certain RB set r, when the number of sub-channels or the number of interlaces used for a PSCCH/PSSCH is denoted as Xᵣ, the number of PSCCH/PSSCH slots associated with one PSFCH occasion is denoted as Yᵣ, and Nᵣ PRBs can be used for a PSFCH, Nᵣ/(Xᵣ × Yᵣ) PRBs may be associated with each of Xᵣ × Yᵣ resources. The above-described operation may be performed for each RB set.

For example, PSFCH resource candidates corresponding to PSCCH/PSSCH transmission including a plurality of RB sets (that is, PSCCH/PSSCH transmission using a plurality of RB sets) may be one of the following A) to C).
A) PSFCH resources in a specific RB set. The specific RB set may be the first RB set or the last RB set among the plurality of RB sets.
B) PSFCH resources in the plurality of RB sets.
C) Whether the above-described A) or the above-described B) is to be applied may be provided by a parameter in a configuration or pre-configuration.

Note that the names of the above-described parameters are not limited, and may be different names.

According to the above-described operation, PSFCH transmission corresponding to PSCCH/PSSCH transmission can be performed on the same LBT channel and the transmission can be performed within the same COT.

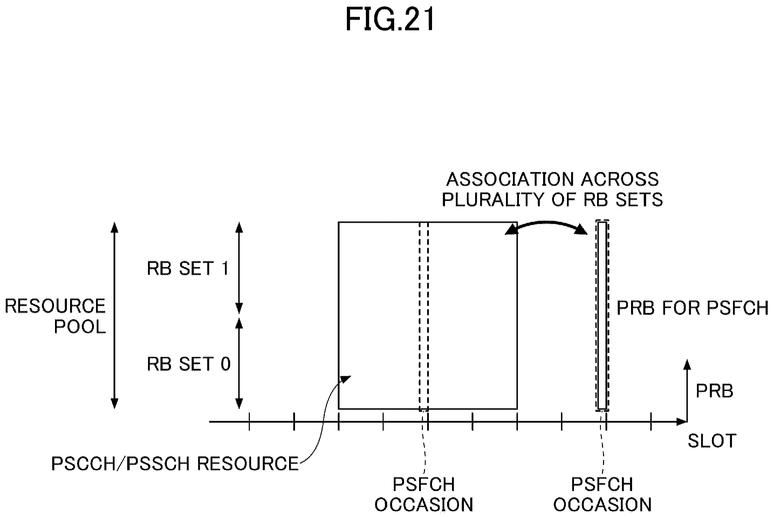

FIG. 21 is a drawing illustrating an example (2) of PSFCH transmission according to an embodiment of the present invention. As illustrated in FIG. 21, a PSCCH/PSSCH resource and a corresponding PSFCH resource may be arranged in different RB sets. In other words, a PSFCH occasion may be configured across a plurality of RB sets.

For example, sl-PSFCH-RB-set and/or sl-PSFCH-Conflict-RB-set may be defined as a parameter or parameters for each RB set. It is assumed that in a certain RB set r, Nᵣ PRBs can be used for a PSFCH. In the resource pool, when the number of sub-channels or the number of interlaces used for a PSCCH/PSSCH is denoted as X, the number of PSCCH/PSSCH slots associated with one PSFCH occasion is denoted as Y, and the sum of Nᵣ is denoted as N, N/(X × Y) PRBs may be associated with each of X × Y resources.

For example, sl-PSFCH-RB-set and/or sl-PSFCH-Conflict-RB-set may be defined as a parameter or parameters for a resource pool. In the resource pool, when the number of sub-channels or the number of interlaces used for a PSCCH/PSSCH denoted as X, the number of PSCCH/PSSCH slots associated with one PSFCH occasion is denoted as Y, and the number of PRBs used for a PSFCH is denoted as N, N/(X × Y) PRBs may be associated with each of X × Y resources.

For example, PSFCH resource candidates corresponding to PSCCH/PSSCH transmission across a plurality of RB sets (that is, PSCCH/PSSCH transmission using a plurality of RB sets) may be one of the following A) to C).
A) PSFCH resources corresponding to a specific RB set. The specific RB set may be the first RB set or the last RB set among the plurality of RB sets.
B) PSFCH resources corresponding to the plurality of RB sets.
C) The above-described A) or the above-described B) may be provided by a parameter in a configuration or pre-configuration.

According to the above-described configuration, the same operation can be performed in both cases of a single RB set and a plurality of RB sets. In addition, the PSFCH capacity corresponding to certain PSCCH/PSSCH transmission can be increased.

Whether the operation described with reference to FIG. 20 or the operation described with reference to FIG. 21 is performed may be provided by a parameter in a configuration or pre-configuration.

According to the above-described configuration, a trade-off between the advantages of the operation illustrated in FIG. 20 and the advantages of the operation illustrated in FIG. 21 can be controlled.

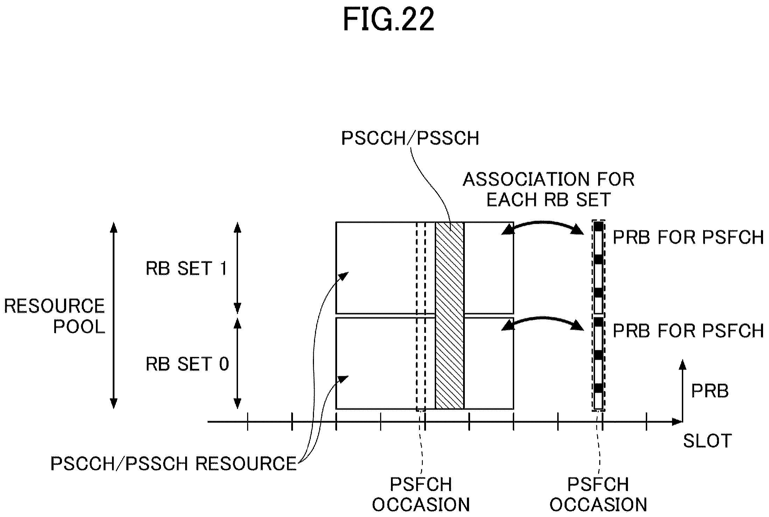

FIG. 22 is a drawing illustrating an example (3) of PSFCH transmission according to an embodiment of the present invention. As illustrated in FIG. 22, it has been discussed that in a case where a PSCCH/PSSCH is transmitted across a plurality of RB sets, that is, in the case of a wideband operation, PSFCH resources corresponding to the respective RB sets are transmitted.

For example, in a case where one PSCCH/PSSCH is transmitted via two RB sets, PSFCHs corresponding to the PSCCH/PSSCH can be transmitted by using both a PSFCH resource in RB set 0 and a PSFCH resource in RB set 1 such that a COT is continuously acquired. In this case, it is necessary to clarify a method of determining PSFCH resources, a rule related to simultaneous transmissions of PSFCHs, and the like. Therefore, the following operations 1) to 5) may be performed.

Operation 1) In a case where a certain PSCCH/PSSCH (referred to as PSCCH/PSSCH-X) is transmitted via a plurality of RB sets (referred to as N RB sets) and corresponding PSFCHs are transmitted in the respective N RB sets, that is, in a case where one PSFCH of N PSFCHs is transmitted in each of the RB sets, a PSFCH resource in each of the RB sets may be determined based on a resource of the PSCCH/PSSCH-X in each of the RB sets.

For example, in a case where the PSCCH/PSSCH-X uses sub-channel 1 in the RB set 0, a PSFCH resource corresponding to the sub-channel 1 in the RB set 0 is used for feedback of the PSCCH/PSSCH-X.

Further, for example, in a case where the PSCCH/PSSCH-X uses sub-channel 3 in the RB set 1, a PSFCH resource corresponding to the sub-channel 3 in the RB set 1 is used for feedback of the PSCCH/PSSCH-X.

As described above, a PSFCH resource corresponding to a sub-channel in a certain RB set may be determined based on a resource of the PSCCH/PSSCH-X in the RB set.

By the above-described operation 1), PSFCH resources to be used are uniquely determined and all of the PSFCH resources can be received and combined on the receiving side.

Operation 2) In a case where a certain PSCCH/PSSCH (referred to as PSCCH/PSSCH-X) is transmitted via a plurality of RB sets (referred to as N RB sets) and corresponding PSFCHs are transmitted in the respective N RB sets, that is, in a case where one PSFCH of N PSFCHs is transmitted in each of the RB sets, a PSFCH resource in each of the RB sets may be determined based on a resource of the PSCCH/PSSCH-X in one of the RB sets.

One of the RB sets may be predefined or may be configured or preconfigured. For example, one of the RB sets may be an RB set corresponding to the smallest index among the RB sets used for the PSCCH/PSSCH-X. For example, in a case where the PSCCH/PSSCH-X uses the sub-channel 1 in the RB set 0, a PSFCH resource corresponding to the sub-channel 1 in the RB set 0 among the N RB sets is used for feedback of the PSCCH/PSSCH-X.

By the above-described operation 2), PSFCH resources to be used are uniquely determined and all of the PSFCH resources can be received and combined on the receiving side.

Operation 3) In a case where a certain PSCCH/PSSCH (referred to as PSCCH/PSSCH-X) is transmitted via a plurality of RB sets (referred to as N RB sets) and corresponding PSFCHs are transmitted in the respective N RB sets, that is, in a case where one PSFCH of N PSFCHs is transmitted in each of the RB sets, information transmitted in PSFCH resources in the RB sets may be the same. In other words, the same information may be transmitted in all the PSFCHs. The same information may be HARQ-ACK.

In addition, with respect to the information transmitted in the PSFCH resources in the RB sets, information (for example, HARQ-ACK) may be transmitted via some of the PSFCHs, and the information need not be transmitted via the remaining PSFCHs and a predefined signal may be transmitted via the remaining PSFCHs.

By the above-described operation 3), PSFCH resources to be used are uniquely determined and all of the PSFCH resources can be received and combined on the receiving side.

Operation 4) In a case that a certain PSCCH/PSSCH (referred to as PSCCH/PSSCH-X) is transmitted via a plurality of RB sets (referred to as N RB sets) and corresponding PSFCHs are transmitted in the respective N RB sets, that is, in a case where one PSFCH of N PSFCHs are transmitted in each of the RB sets, the terminal 20 may perform the following a) to d) for the specifications related to simultaneous PSFCH transmissions, for example, the maximum number of simultaneous transmissions and power control related to simultaneous transmissions.
a) The N PSFCHs may be treated as one PSFCH transmission.
b) The N PSFCHs may be treated as individual PSFCH transmissions. For example, in a case where the N PSFCHs overlap another PSFCH transmitted by the terminal 20 itself in the time domain, the priorities of some of the N PSFCHs may be lowered (that is, values indicating the priorities may be set to the highest values), and prioritization processing and/or power allocation may be applied. Note that the other PSFCH may be a PSFCH corresponding to a PSCCH/PSSCH other than the PSCCH/PSSCH-X.
c) In an RB set in which another PSFCH to be transmitted by the terminal 20 itself is present, a PSFCH corresponding to the PSCCH/PSSCH-X need not be transmitted. This may be applied to a specific RB set but need not be applied to a specific RB set. The specific RB set may be predefined, or may be configured or preconfigured. For example, the specific RB set may be an RB set corresponding to the smallest index among the RB sets used for the PSCCH/PSSCH-X. The other PSFCH transmitted by the terminal 20 itself may be limited to a PSFCH corresponding to a PSCCH/PSSCH using only one RB set.
d) In a case where there are PSCCH/PSSCH-X transmitted via N RB sets and PSCCH/PSSCH-Y transmitted via M RB sets, and there are PSFCH-X corresponding to the PSCCH/PSSCH-X and PSFCH-Y corresponding to the PSCCH/PSSCH-Y in a certain RB set, the above c) may be applied to one of the PSFCH-X and the PSFCH-Y, and the other may be transmitted.

Further, in a case where there are PSCCH/PSSCH-X transmitted via N RB sets and PSCCH/PSSCH-Y transmitted via M RB sets, and there are PSFCH-X corresponding to the PSCCH/PSSCH-X and PSFCH-Y corresponding to the PSCCH/PSSCH-Y in a certain RB set, d) may be applied only to an RB set in which a PSFCH corresponding to a PSCCH/PSSCH using only one RB set is not present.

By the above-described operation 4), information may be transmitted without insufficiency and unnecessary transmission may be avoided for simultaneous PSFCH transmissions.

Operation 5) In a case where a certain PSCCH/PSSCH (referred to as PSCCH/PSSCH-X) is transmitted via a plurality of RB sets (referred to as N RB sets) and corresponding PSFCHs are transmitted in the respective N RB sets, that is, in a case where one PSFCH of N PSFCHs is transmitted in each of the RB sets, a transmission according to any of the above-described operation 1), the above-described operation 2), the above-described operation 3), and the above-described operation 4) may be limited to a PSFCH transmission performed within an acquired COT.

For example, with respect to a PSFCH transmission in each of the N RB sets, in a case where there are an RB set for which a COT needs to be newly acquired and an RB set for which a COT is already acquired, a transmission according to any of the above-described operation 1), the above-described operation 2), the above-described operation 3), and the above-described operation 4) may be performed in the RB set for which the COT is already acquired, and no transmission need be performed in the RB set for which a COT needs to be newly acquired.

For example, with respect to PSFCH transmissions respectively in N RB sets, in a case where there are only RB sets for which a COT needs to be newly acquired, a PSFCH transmission corresponding to the PSCCH/PSSCH-X may be performed only in one of the RB sets, and PSFCH transmissions corresponding to the PSCCH/PSSCH-X need not be performed in the remaining RB sets.

By the above-described operation 5), an unnecessary PSFCH transmission is not performed in an RB set for which a COT is lost.

Note that in an embodiment of the present invention, the conventional structures of an SL channel and an SL signal are used, but the structures are not limited to the conventional structures. For example, an embodiment of the present invention may be applied to a case in which an interlaced channel is applied as a configuration for satisfying the OCB requirements.

Note that the above-described embodiments may be applied only when a predetermined condition is satisfied. For example, an embodiment of the present invention may be applied by being associated with a predetermined SL channel or an SL signal. For example, an embodiment of the present invention may be applied to any one of a PSCCH/PSSCH, a PSFCH, an S-SSB, and an SL positioning RS. For example, an embodiment of the present invention may be applied based on a predetermined configuration or pre-configuration. For example, an embodiment of the present invention may be applied to a case in which "enabling" of an embodiment of the present invention is provided by a configuration or pre-configuration. For example, in a case where the LBT method related to the second SL transmission is not Type 1, or has become a type other than Type 1, an embodiment of the present invention is not required to be applied

Note that in order to apply LBT Type 2A, 2B, or 2C, an additional transmission (additional TX) such as a CP extension may be performed immediately before transmission P.

Note that the UE capability related to the applicability or operation of an embodiment of the present invention may be defined, and may or may not be reported to the base station 10 and/or the terminal 20.

Note that the SL transmission by the UE may be any one of PSCCH, PSSCH, PSFCH, S-SSB, or SL-PRS, and each operation of the present embodiment may be applied to a different channel or signal.

Note that at least one of the SL transmissions by the UE may be a UL transmission.

An embodiment of the present invention may be applied to any one of resource selection, resource reselection, reevaluation, or preemption check.

Note that a method according to an embodiment of the present invention is not limited to being applied to the above-described case of device-to-device direct communication, and may be applied to other similar cases.

The above-described embodiments need not be limited to V2X terminals, and may be applied to terminals performing D2D communication.

According to the above-described embodiments, in a case where a resource pool is configured with a plurality of RB sets in an unlicensed band, the association between PSCCH/PSSCH and PSFCH may be determined.

That is, a feedback channel corresponding to device-to-device direct communication using a plurality of listen before talk (LBT) channels in an unlicensed band may be transmitted.

### (Device Configuration)

Next, an example functional configuration of the base station 10 and the terminal 20 for performing the processes and operations described above will be described. The base station 10 and the terminal 20 include functions for implementing the embodiments described above. However, each of the base station 10 and the terminal 20 may include only some of the functions in an embodiment.

### <Base Station 10>

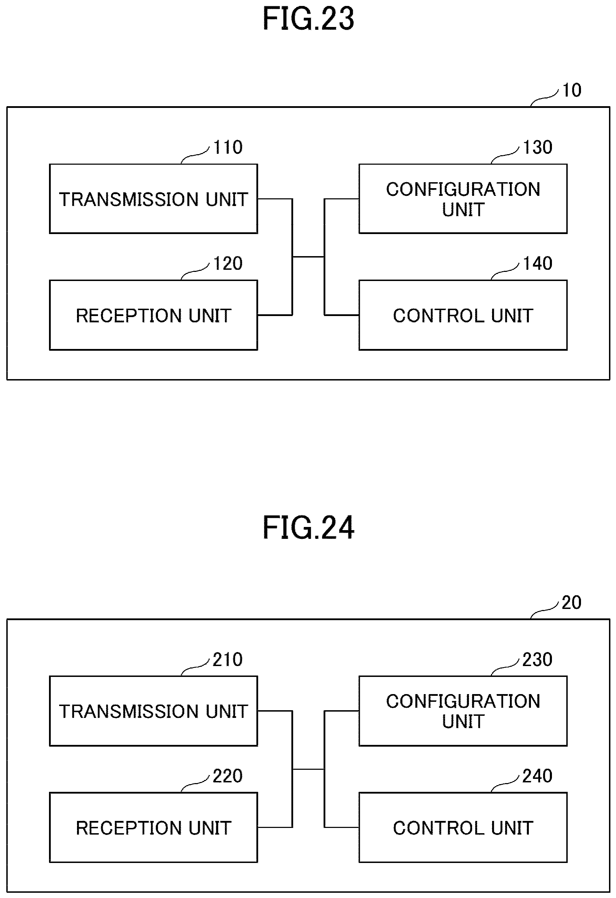

FIG. 23 is a drawing illustrating an example of a functional configuration of the base station 10. As illustrated in FIG. 23, the base station 10 includes a transmission unit 110, a reception unit 120, a configuration unit 130, and a control unit 140. The functional configuration illustrated in FIG. 23 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function for transmitting NR-PSS, NR-SSS, NR-PBCH, DL/UL control signals, DL reference signals, and the like to the terminal 20.

The configuration unit 130 stores preset configuration information and various pieces of configuration information to be transmitted to the terminal 20 in a storage apparatus and reads the preset configuration information from the storage apparatus as necessary. Contents of the configuration information are, for example, information related to D2D communication configurations and the like.

As described in an embodiment, the control unit 140 performs processing related to the configuration in which the terminal 20 performs D2D communication. Further, the control unit 140 transmits scheduling of D2D communication and DL communication to the terminal 20 through the transmission unit 110. Further, the control unit 140 receives information related to the HARQ response of the D2D communication and the DL communication from the terminal 20 via the reception unit 120. The functional units related to signal transmission in the control unit 140 may be included in the transmission unit 110, and the functional units related to signal reception in the control unit 140 may be included in the reception unit 120.

### <Terminal 20>

FIG. 24 is a diagram illustrating an example of a functional configuration of the terminal 20. As illustrated in FIG. 24, the terminal 20 includes a transmission unit 210, a reception unit 220, a configuration unit 230, and a control unit 240. The functional configuration illustrated in FIG. 24 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, or reference signals transmitted from the base station 10. Further, for example, with respect to the D2D communications, the transmission unit 210 transmits, to another terminal 20, a physical sidelink control channel (PSCCH), a physical sidelink shared channel (PSSCH), a physical sidelink discovery channel (PSDCH), a physical sidelink broadcast channel (PSBCH), and the like, and the reception unit 220 receives, from the other terminal 20, a PSCCH, a PSSCH, a PSDCH, a PSBCH, and the like.

The configuration unit 230 stores various pieces of configuration information received from the base station 10 or the terminal 20 by the reception unit 220 in a storage apparatus and reads them from the storage apparatus as necessary. In addition, the configuration unit 230 stores preconfigured configuration information. Contents of the configuration information are, for example, information related to D2D communication configurations and the like.

The control unit 240 controls D2D communication for establishing RRC connection with another terminal 20 as described in an embodiment of the present invention. Further, the control unit 240 performs processing related to the power-saving operation. Further, the control unit 240 performs HARQ related processing of D2D communication and DL communication. Further, the control unit 240 transmits, to the base station 10, information related to the HARQ response of the D2D communication to the other terminal 20 and the DL communication scheduled by the base station 10. Further, the control unit 240 may perform scheduling of the D2D communication for the other terminal 20. In addition, the control unit 240 may autonomously select a resource to be used for the D2D communication from a resource selection window based on the sidelink sensing result or may perform reevaluation or preemption. Further, the control unit 240 performs processing related to power saving in transmission and reception of D2D communications. In addition, the control unit 240 performs processing related to inter-terminal coordination in the D2D communication. In addition, the control unit 240 performs processing related to LBT in the D2D communication. The functional units related to signal transmission in the control unit 240 may be included in the transmission unit 210, and the functional units related to signal reception in the control unit 240 may be included in the reception unit 220.

### (Hardware Structure)

The block diagrams that have been used to describe the above embodiments (FIG. 23 and FIG. 24) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

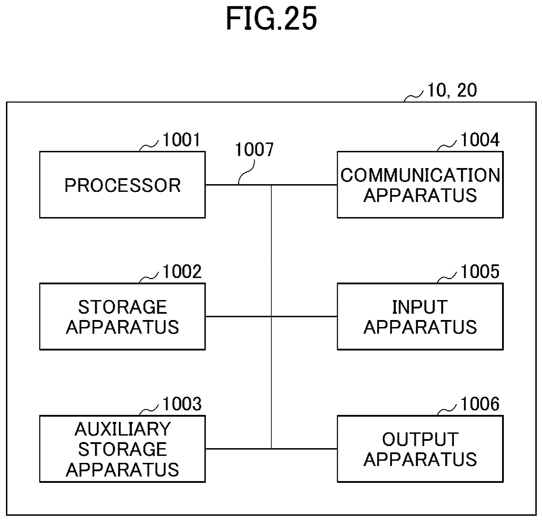

For example, the base station 10, the terminal 20, etc., according to an embodiment of the present disclosure may function as a computer for processing the radio communication method of the present disclosure. FIG. 25 is a drawing illustrating an example of a hardware structure of the base station 10 and the terminal 20 according to one embodiment of the present disclosure. Physically, the above-described base station 10 and terminal 20 may each be formed as a computer apparatus that includes a processor 1001, a storage apparatus 1002, an auxiliary storage apparatus 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the storage apparatus 1002, and by allowing the processor 1001 to perform calculations to control communication via the communication apparatus 1004 and control at least one of reading or writing of data in the storage apparatus 1002 and the auxiliary storage apparatus 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the auxiliary storage apparatus 1003 and the communication apparatus 1004, into the storage apparatus 1002, and executes various processes according to these. As for the programs, programs to allow computers to execute at least part of the operations of the above-described embodiments are used. For example, the control unit 140 of the base station 10 illustrated in FIG. 23 may be implemented by control programs that are stored in the storage apparatus 1002 and that operate on the processor 1001. In addition, for example, the control unit 240 of the terminal 20 illustrated in FIG. 24 may be implemented by control programs that are stored in the storage apparatus 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage apparatus 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The storage apparatus 1002 may be referred to as a "register," a "cache," a "main memory (primary storage apparatus)" and so on. The storage apparatus 1002 can store executable programs (program codes), software modules, and the like for implementing the communication method according to one embodiment of the present disclosure.

The auxiliary storage apparatus 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the storage apparatus 1002 and/or the auxiliary storage apparatus 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the storage apparatus 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

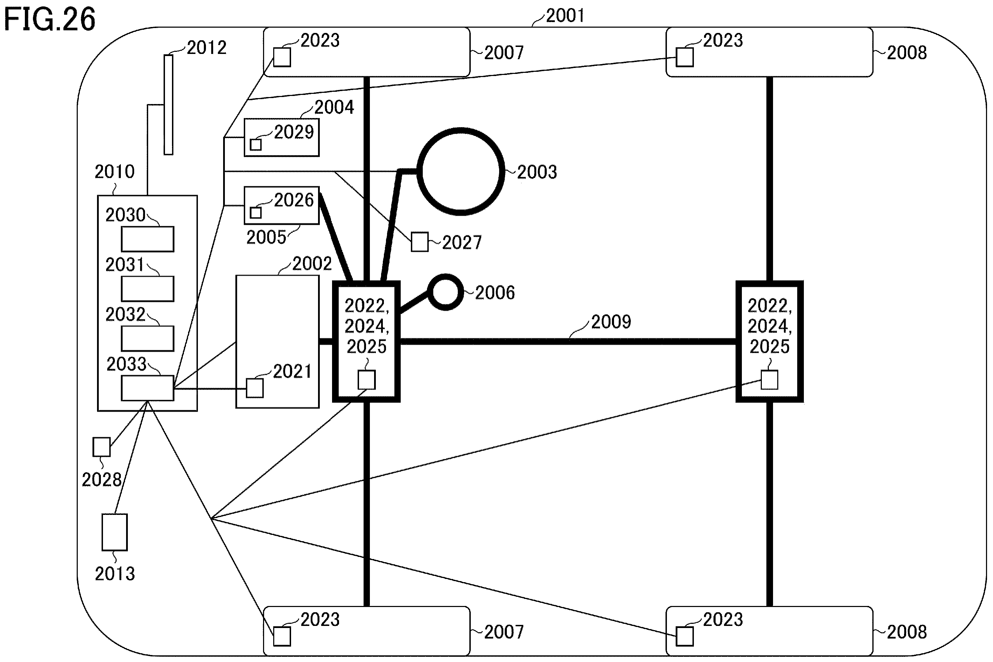

FIG. 26 shows an example of a configuration of a vehicle 2001. As shown in FIG. 26, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Summary of Embodiments)

As described above, according to an embodiment of the present invention, there is provided a terminal including a reception unit configured to perform listen before talk (LBT) corresponding to a transmission signal in a resource pool including a plurality of resource block (RB) sets in an unlicensed band; a control unit configured to determine a channel in each of the plurality of RB sets based on a resource of the transmission signal, the channel being for receiving feedback information corresponding to the transmission signal from another terminal; and a transmission unit configured to transmit the transmission signal to the another terminal in a case where the LBT is successful, wherein the reception unit receives, on the channel, the feedback information corresponding to the transmission signal from the another terminal.

According to the above-described configuration, in a case where a resource pool includes a plurality of RB sets in an unlicensed band, the association between PSCCH/PSSCH and PSFCH can be determined. That is, a feedback channel corresponding to device-to-device direct communication in which a plurality of listen before talk (LBT) channels are used in an unlicensed band can be transmitted.

The control unit is may be configured to determine a resource of the channel in each of the plurality of RB sets based on a resource of the transmission signal in an RB set in which the channel is present. With the above-described configuration, in a case where a resource pool includes a plurality of RB sets, the association between PSCCH/PSSCH and PSFCH can be determined.

The control unit may be configured to determine a resource of the channel in each of the plurality of RB sets based on a resource of the transmission signal in any RB set of the plurality of RB sets. With the above-described configuration, in a case where a resource pool includes a plurality of RB sets, the association between PSCCH/PSSCH and PSFCH can be determined.

The control unit may be configured not to transmit feedback information in channels in some of the plurality of RB sets. With the above-described configuration, in a case where a resource pool includes a plurality of RB sets, the association between PSCCH/PSSCH and PSFCH can be determined.

The control unit may be configured not to receive the feedback information corresponding to the transmission signal in a certain RB set among the plurality of RB sets, in a case where a channel for receiving feedback information corresponding to another transmission signal other than the transmission signal is present in the certain RB set. With the above-described configuration, in a case where a resource pool includes a plurality of RB sets, the association between PSCCH/PSSCH and PSFCH can be determined.

Further, according to an embodiment of the present invention, there is provided a communication method performed by a terminal, the communication method including a procedure of performing listen before talk (LBT) corresponding to a transmission signal in a resource pool including a plurality of resource block (RB) sets in an unlicensed band; a procedure of determining a channel in each of the plurality of RB sets based on a resource of the transmission signal, the channel being for receiving feedback information corresponding to the transmission signal from another terminal; a procedure of transmitting the transmission signal to the another terminal in a case where the LBT is successful; and a procedure of receiving, on the channel, the feedback information corresponding to the transmission signal from the another terminal.

With the above-described configuration, in a case where a resource pool includes a plurality of RB sets in an unlicensed band, the association between PSCCH/PSSCH and PSFCH can be determined. That is, a feedback channel corresponding to device-to-device direct communication in which a plurality of listen before talk (LBT) channels are used in an unlicensed band can be transmitted.

### (Supplement of Embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), Wideband Code Division Multiple Access (W-CDMA (registered trademark)), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a terminal 20, one or more BWPs may be configured in one carrier.

At least one of the configured BWPs may be activated, and the UE may assume that the terminal 20 will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

This International patent application is based on and claims priority to Japanese Patent Application No. 2023-067236, filed on April 17, 2023, the entire contents of which are incorporated herein by reference.

### DESCRIPTION OF THE REFERENCE NUMERALS

10 base station
110 transmission unit
120 reception unit
130 configuration unit
140 control unit
20 terminal
210 transmission unit
220 reception unit
230 configuration unit
240 control unit
1001 processor
1002 memory
1003 storage
1004 communication apparatus
1005 input apparatus
1006 output apparatus
2001 vehicle
2002 drive unit
2003 steering unit
2004 accelerator pedal
2005 brake pedal
2006 shift lever
2007 front wheel
2008 rear wheel
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a reception unit configured to perform listen before talk (LBT) corresponding to a transmission signal in a resource pool including a plurality of resource block (RB) sets in an unlicensed band;
a control unit configured to determine a channel in each of the plurality of RB sets based on a resource of the transmission signal, the channel being for receiving feedback information corresponding to the transmission signal from another terminal; and
a transmission unit configured to transmit the transmission signal to the another terminal in a case where the LBT is successful, wherein
the reception unit receives, on the channel, the feedback information corresponding to the transmission signal from the another terminal.

2. The terminal according to claim 1, wherein the control unit is configured to determine a resource of the channel in each of the plurality of RB sets based on a resource of the transmission signal in an RB set in which the channel is present.

3. The terminal according to claim 1, wherein the control unit is configured to determine a resource of the channel in each of the plurality of RB sets based on a resource of the transmission signal in one RB set among the plurality of RB sets.

4. The terminal according to claim 1, wherein the control unit is configured not to transmit, for some of the plurality of RB sets, feedback information in the channel in each of the plurality of RB sets.

5. The terminal according to claim 1, wherein the control unit is configured not to receive the feedback information corresponding to the transmission signal in a certain RB set among the plurality of RB sets, in a case where a channel for receiving feedback information corresponding to another transmission signal other than the transmission signal is present in the certain RB set.

6. A communication method performed by a terminal, the communication method comprising:
a procedure of performing listen before talk (LBT) corresponding to a transmission signal in a resource pool including a plurality of resource block (RB) sets in an unlicensed band;
a procedure of determining a channel in each of the plurality of RB sets based on a resource of the transmission signal, the channel being for receiving feedback information corresponding to the transmission signal from another terminal;
a procedure of transmitting the transmission signal to the another terminal in a case where the LBT is successful; and
a procedure of receiving, on the channel, the feedback information corresponding to the transmission signal from the another terminal.
